# EUROPEAN PATENT SPECIFICATION

(11) **EP 2 415 236 B1**
(45) Date of publication and mention of the grant of the patent: **03.12.2014**
(21) Application number: 09789670.8
(22) Date of filing: 12.05.2009
(51) Int. Cl.: H04L 29/08, H04W 8/20, G06Q 10/10, G06Q 50/00

(54) **METHOD AND APPARATUS FOR ESTABLISHING A SOCIAL NETWORK THROUGH FILE TRANSFERS**
VERFAHREN UND VORRICHTUNG ZUR EINRICHTUNG EINES SOZIALEN NETZWERKS DURCH DATEITRANSFERS
PROCÉDÉ ET APPAREIL D'ÉTABLISSEMENT D'UN RÉSEAU SOCIAL PAR TRANSFERTS DE FICHIER

(30) Priority: 02.04.2009 US 417248
(43) Date of publication of application: 08.02.2012
(73) Proprietor: QUALCOMM Incorporated, San Diego, CA 92121 (US)
(72) Inventor: ROBERTS, John, R., San Diego CA 92121 (US)
(74) Representative: Dunlop, Hugh Christopher
(86) International application number: PCT/US2009/043645
(87) International publication number: WO 2010/114569

(56) References cited:
- EP-A- 1 919 166
- US-A1- 2002 090 911
- US-A1- 2006 218 225

## Description

### FIELD OF THE INVENTION

The present invention relates generally to wireless communication systems, and more particularly to methods and apparatus for providing a social network through embedding attributes in exchanged files.

### BACKGROUND

Digital file sharing is a major focus of many innovative software applications. There is significant user demand for new devices and applications for sharing photographs, videos, and music, as well as more traditional file types such as word processor documents and spreadsheets. Users have traditionally shared digital files between computers through email, websites, and exchanging physical storage media, such as CD-ROM disks and USB storage devices. As the storage capacity of mobile devices, such as cellular phones and portable MP3 players, have increased new applications have emerged to allow users to share digital files between mobile devices.

Users are also increasingly turning to social networking websites and applications to share digital files. Social networking websites not only provide an easy way to share files with contacts but also increase the collaborative aspect of digital files. Some social networking websites allow users to see which other users have access to a given photograph. Some also allow users to collaboratively edit certain files. However, social networking applications generally store information on a centralized server.

US 2006/0218225 relates to a social networking device. A user builds a social network by adding contact information for people (members) within his or her interest group, and then adds content regarding the interest in the device. The content can be shared by the other members.

### SUMMARY

In accordance with the invention, there is provided: a method in accordance with claim 1; a mobile device in accordance with claim 7; and a computer program product in accordance with claim 14.

The various aspects provide methods for establishing a social network including establishing a close range communication link between a first mobile device and a second mobile device, and transmitting social network information from the first mobile device to the second mobile device via the close range communication link. The social network information may include a social network identifier created by a user of the first mobile device which may be included within a data file transmitted to the second mobile device via the close range communication link or within metadata of a file transmitted to the second mobile device via the close range communication link. The social network identifier may be an identifier of the first mobile device. The first mobile device may also receive an identifier of the second mobile device via the close range communication link, and storing the identifier of the second mobile device in a data file or within the metadata of the file being transmitted before the file is transmitted to the second mobile device. The social information stored within the first mobile device in a data file or in a file metadata may be updated based upon updated social information received in a subsequent message from a third mobile device. The close range communication link may be a near field communication (NFC) protocol communication link, a Bluetooth^{®} protocol communication link, a IEEE 802.14.4 protocol communication link, an infrared communication link, or other wireless proximity-limited communication link.

The various aspects may also provide methods for sharing files within a social network by establishing a close range communication link between a first mobile device and a second mobile device, receiving in the first mobile device social network information from the second mobile device via the close range communication link, discovering whether the first mobile device and the second mobile device are members of a common social network based upon the received social network information, selecting a file for transmission to the second mobile device based upon the discovered common social network, and transmitting the selected file from the first mobile device to the second mobile device via the close range communication link. The social network information may be an identifier that may be saved in a data file or within metadata of files designated for sharing with the social network. The social network information may also be an identifier of the second mobile device, such as a telephone number, and discovery of a common social network may be accomplished by comparing the received identifier to identifiers in an address database to identify a match, in which case the common social network may be a category assigned to a matching address data record. The file transferred to the second mobile device may be selected to avoid redundant transmissions by receiving identifiers of files designated for sharing with the social network stored on the second mobile device and transmitting only those files on the first mobile device that are not among the received file identifiers.

In an aspect a mobile device includes a processor, a memory and a wireless close range communication transceiver, in which the processor is configured to establish a close range communication link between a mobile device and a second mobile device via the wireless close range communication transceiver and transmit social network information to the second mobile device via the close range communication link. The social network information may include a social network identifier created by a user of the mobile device which may be included within a data file that the processor is configure to transmit to the second mobile device via the close range communication link or within metadata of a file that the processor is configure to transmit to the second mobile device via the close range communication link. The social network identifier may be an identifier of the mobile device. The mobile device processor may also be configured to receive an identifier of the second mobile device via the close range communication link, and store the identifier of the second mobile device in a data file in the memory or within the metadata of the file being transmitted before the file is transmitted to the second mobile device. The processor may be further configured to update the social information stored within the mobile device memory in a data file or in a file metadata based upon updated social information received in a subsequent message from a third mobile device. The wireless close range communication transceiver may be a near field communication (NFC) protocol transceiver, a Bluetooth^{®} protocol transceiver, a IEEE 802.14.4 protocol transceiver, an infrared transceiver, or other wireless proximity-limited communication transceiver. The mobile device processor may further be configured to receive social network information from the second mobile device via the close range communication link, discover whither the mobile device and the second mobile device are members of a common social network based upon the received social network information, select a file for transmission to the second mobile device based upon the discovered common social network, and transmit the selected file from the first mobile device to the second mobile device via the close range communication link. The social network information may be an identifier saved in a data file or within metadata of files designated for sharing with the social network. The social network information may also be an identifier of the second mobile device, such as a telephone number, and the processor may be configured to discover a common social network by comparing the received identifier to identifiers in an address database to identify a match, in which case the common social network may be a category assigned to a matching address data record. The processor may be further configured to select the file transferred to the second mobile device to avoid redundant transmissions by receiving identifiers of files designated for sharing with the social network stored on the second mobile device and transmitting only those selected files that are not among the received file identifiers.

In an aspect a mobile device includes a means for establishing a close range communication link between the mobile device and a second mobile device, and a means for transmitting social network information from the first mobile device to the second mobile device, via the close range communication link. The mobile device may further include a means for transmitting a data file or file to the second mobile device via the close range-communication link. The social network information may include a social network identifier created by a user of the mobile device which may be included within a data file transmitted to the second mobile device or within metadata of a file transmitted to the second mobile device. The social network identifier may be an identifier of the mobile device. The mobile device may also include a means for receiving an identifier of the second mobile device via the close range communication link, and a means for storing the identifier of the second mobile device in a data file or within the metadata of the file being transmitted before the file is transmitted to the second mobile device. The mobile device may also include a means for updating social information stored within the mobile device in a data file or in a file metadata based upon updated social information received in a subsequent message from a third mobile device. The means for establishing a close range communication link may be a means for establishing a near field communication (NFC) protocol communication link, a means for establishing a Bluetooth^{®} protocol communication link, a means for establishing a IEEE 802.14.4 protocol communication link, a means for establishing an infrared communication link, or a means for establishing another wireless proximity-limited communication link. The mobile device may further include a means for receiving social network information from the second mobile device via the close range communication link, a means for discovering whether the mobile device and the second mobile device are members of a common social network based upon the received social network information, a means for selecting a file for transmission to the second mobile device based upon the discovered common social network, and a means for transmitting the selected file from the first mobile device to the second mobile device via the close range communication link. The mobile device may include a means for saving the social network information as an identifier in a data file or within metadata of files designated for sharing with the social network. The social network information may also be an identifier of the second mobile device, such as a telephone number, in which case the means for discovering a common social network may include a means for comparing the received identifier to identifiers in an address, database to identify a match, in which case the common social network may be a category assigned to a matching address data record. The mobile device may include a means for selecting files for transfer to the second mobile device to avoid redundant transmissions including a means for receiving identifiers of files designated for sharing with the social network stored on the second mobile device and a means for transmitting only those selected files that are not among the received file identifiers.

In an aspect a computer program product includes a computer-readable medium including at least one instruction for establishing a close range communication link between a first mobile device and a second mobile device, and at least one instruction for transmitting social network information from the first mobile device to the second mobile device via the close range communication link. The computer-readable medium may include at least one instruction for transmitting a file or data file to the second mobile device via the close range communication link. The social network information may include a social network identifier created by a user of the first mobile device which may be included within a data file transmitted to the second mobile device or within metadata of a file transmitted to the second mobile device. The social network identifier may be an identifier of the first mobile device. The computer-readable medium may include at least one instruction for receiving an identifier of the second mobile device via the close range communication link, and at least one instruction for storing the identifier of the second mobile device in a data file or within the metadata of the file being transmitted before the file is transmitted to the second mobile device. The computer-readable medium may include at least one instruction for updating the social information stored within the first mobile device in a data file or in a file metadata based upon updated social information received in a subsequent message from a third mobile device. The computer-readable medium may include at least one instruction for establishing a near field communications (NFC) protocol communication link, at least one instruction for establishing a Bluetooth^{®} protocol communication link, at least one instruction for establishing a IEEE 802.14.4 protocol communication link, at least one instruction for establishing an infrared communication link, or at least one instruction for establishing another wireless proximity-limited communication link. The computer-readable medium may further include at least one instruction for receiving in the first mobile device social network information from the second mobile device via the close range communication link, at least one instruction for discovering whether the first mobile device and the second mobile device are members of a common social network based upon the received social network information, at least one instruction for selecting a file for transmission to the second mobile device based upon the discovered common social network, and at least one instruction for transmitting the selected file from the first mobile device to the second mobile device via the close range communication link. The social network information may be an identifier that may be saved in a data file or within metadata of files designated for sharing with the social network. The social network information may also be an identifier of the second mobile device, such as a telephone number, and the computer-readable medium may include at least one instruction for discovery of a common social network may be accomplished by comparing the received identifier to identifiers in an address database to identify a match, in which case the common social network may be a category assigned to a matching address data record. The computer-readable medium may include at least one instruction for selecting the file transferred to the second mobile device to avoid redundant transmissions including at least one instruction for receiving identifiers of files designated for sharing with the social network stored on the second mobile device, and at least one instruction for transmitting those selected files that are not among the received file identifiers.

### BRIEF DESCRIPTION OF THE DRAWINGS

The accompanying drawings, which are incorporated herein and constitute part of this specification, illustrate exemplary aspects of the invention, and, together with the general description given above and the detailed description given below, serve to explain features of the invention.
FIG. 1 is a system block diagram of a communication system suitable for use with an aspect.
FIG. 2 is a block diagram of an example social network.
FIGS. 3a-3c are process flow diagram of aspect methods for sharing digital files in a social network.
FIG. 4 is a data structure diagram of an XML formatted data snippet suitable for use with the various aspects.
FIG. 5 is a process flow diagram of an aspect method for automatically sharing digital files in a social network.
FIG. 6 is a data structure diagram of an XML formatted data snippet suitable for use with the various aspects.
FIG. 7 is a block diagram of another example social network.
FIG. 8 is a message flow diagram of communications suitable for establishing a social network according to an aspect.
FIG. 9 is a message flow diagram of communications suitable for establishing a social network according to another aspect.
FIG. 10 is a block diagram of another example social network.
FIG. 11 is a circuit block diagram of an example mobile device suitable for use with the various aspects,

### DETAILED DESCRIPTION

The various aspects will be described in detail with reference to the accompanying drawings. Wherever possible, the same reference number will be used throughout the drawings to refer to the same or like parts. References made to particular examples and implementations are for illustrative purposes, and are not intended to limit the scope of the invention or the claims.

In this description, the term "exemplary" is used herein to mean "serving as an example, instance, or illustration." Any implementation described herein as "exemplary" is not necessarily to be construed as preferred or advantageous over other implementations.

As used herein, the term "mobile device" is intended to encompass any form of programmable computer as may exist or will be developed in the future which implements a communication module for wireless voice and data communications, including, for example, cellular telephones, personal data assistants (PDA's), palm-top computers, laptop, and notebook computers, wireless electronic mail receivers (e.g., the Blackberry® and Treo® devices), multimedia Internet enabled cellular telephones (e.g., the Blackberry Storm®), and similar personal electronic devices which include a wireless communication module, processor, and memory.

As used herein, the term "file" or "digital file" is intended to encompass any resource for storing information in a manner that can be recognized by a computer processor. Users typically think of a file as an entity within a file system that can be edited, copied, moved, deleted, or renamed. However, the same information that can be stored in a file that is part of a file system can be stored within an application that hides the data from direct access by the user. Such applications may include database management systems and encrypted file stores. Furthermore, while files are typically stored in a file system based on one or more permanent storage media such as a hard drive or flash memory, files may be stored in volatile memory such as RAM or cache memory.

The various aspects make use of wireless proximity-limited communication technologies to exchange files and social networking information between devices. A variety of wireless proximity-limited communication technologies may be used for this purpose. Examples of proximity-limited communication technologies include: near-field communications (NFC) protocol technologies; Bluetooth^{®} protocol technologies wireless personal area networks (WPAN) technologies based upon IEEE 802.14.4, including ZigBee^{®}, WirelessHART and MiWi specifications; and infrared communication technologies, such as the MDA (Infrared Data Association) protocol.

NFC technology devices operate in the unregulated RF band of 13.56MHz and fully comply with existing contactless smart-card technologies, standards, and protocols such as FeliCa and Mifare. NFC-enabled devices are interoperable with contactless smart-cards and smart-card readers conforming to these protocols. The effective range of NFC protocol communications is approximately 0-20 cm (up to 8 in.), and data communications terminate either by a command from an application using the link or when the communicating devices move out of range.

However, the aspects and the claims are not necessarily limited to any one or all of the NFC protocols, and instead may encompass any close range (i.e., proximity-limited) wireless communication link. The Bluetooth^{®} communication protocol is another suitable close range communication link that may be used. Bluetooth^{®} transceivers may be configured to establish communication links automatically or in response to user commands as part of the various aspects as are provided for in the Bluetooth^{®} protocol. The IrDA (Infrared Data Association) protocol may be used since the infrared transceivers must be within visual range of each other in order to establish a communication link, thereby restricting communications to situations where two mobile device users are cooperating to establishing the communication link. Short range wireless communication technologies, such as WPAN technologies based upon the IEEE 802.15.4 protocol may also be used, perhaps with range limiting features such as reduced transmission power level. In addition, other close range communication protocols and standards may be developed which may be used in the various aspects in the same manner as NFC, Bluetooth^{®}, IrDA, and WPAN protocol devices.

Further, longer range wireless technologies and protocols may be used with modifications or additions that limit their effective range for purposes of identifying electronic devices one to another. For example, IEEE 802.11 (WiFi) (which communicates using the 2.4 GHz frequency band) and UWB (Ultra Wideband) wireless communication protocols and standards may also be used in combination with range-limiting features. For example, the power of transmitters may be limited for authentication communications, such that two devices must be relatively close together (e.g., within a few feet of each other) in order to send and receive the communications contemplated in the various aspects. As another example, round-trip communication delay limits may be imposed such that authentication communications can only occur if the round trip of such signals is less than a threshold set to reject signals sent from more than a dozen feet or so, and maybe as short as two to three feet separation.

For simplicity of reference, the various aspects and the claims refer to "close range communications" and "near field communications" in order to encompass any and all wireless proximity-limited communication technologies. References herein to "close range communication links" and "near field communications" are not intended to limit the scope of the description or the claims in any way other than the communications technology will not exchange credential information beyond the immediate vicinity of a user, which may be about three meters (about twelve feet). In a preferred aspect, the close communication range is limited to less than about one meter (about three feet), in a further preferred aspect, the communication range is limited to less than about one foot, and in some aspects the communication range is limited to approximately 0-20 cm (up to 8 in.). In order to reflect this distinction, descriptions of aspects using links with communication ranges of approximately 0-20 cm (up to 8 in.) refer to "NFC protocol" links. Therefore, references to "NFC protocol" communications are intended to be limited to communications transceivers and technologies with ranges provided by the various NFC protocols and standards listed above, but may also include technologies with a similar limited communication range.

With close range communications like NFC protocol devices it is easy to connect any two devices to each other with a secure wireless data link to exchange information or access content and services. Solution vendors argue that the intuitive operation of NFC protocol systems makes the technology particularly easy for consumers to use ("just touch and go"), while the inherent security resulting from its very short communication range makes such systems ideal for mobile payment and financial transaction applications. Familiar applications of NFC protocol technology are electronic pass keys used in building security systems, mass transit fare card systems, and smart credit cards which need only to be brought close to a point of sale reader to complete a transaction.

Social networking websites and applications are rapidly gaining in popularity as vehicles for sharing digital files among informal groups of individuals. Social networking via the Internet enable the sharing of files among individuals, but the information is stored in a centralized server that group members access. This centralized system topography may not be ideal for integrating social networking concepts with file sharing when files are maintained on group member mobile devices. Applications that enable decentralized social networks that include shared files among a limited or trusted social network would fill a gap in current social networking concepts available. The various aspects take advantage of close range wireless communication technologies and the portability of mobile devices to enable users to create ad hoc social networks for sharing files among a trusted social network. Using close range communication technologies to create the social network and exchange files allows users to control the members of the network more so than possible with Internet networks. Since two mobile devices must be brought very close together to create or join a social network, users will know who is joining and will have access to shared files.

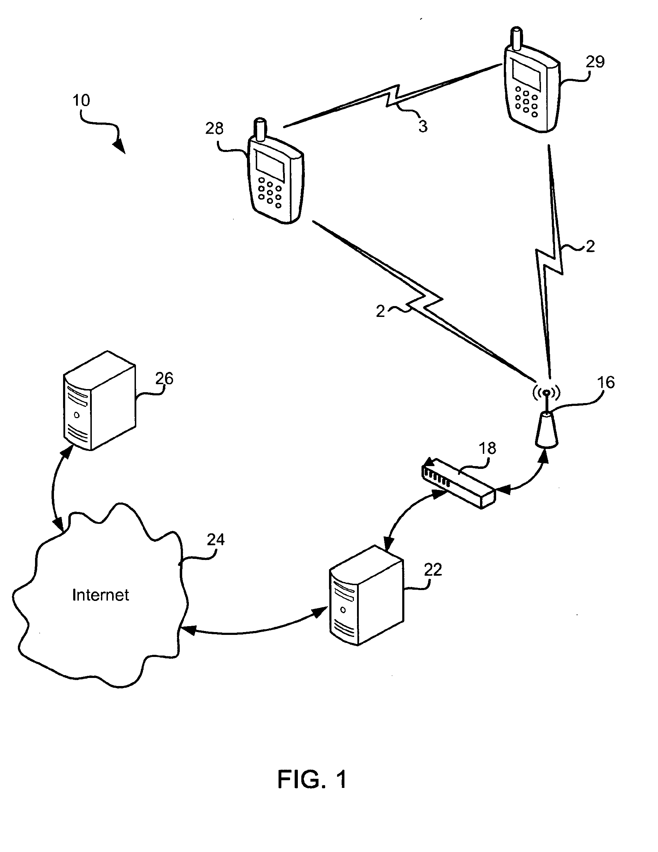

The various aspects may be employed in a variety of wired and wireless networks, including for example a wireless network employing cellular data communication links. By way of example, FIG. 1 shows a block diagram of a communication network 10 including mobile devices 28, 29 configured with close range communication transceivers that can establish close range wireless communication links 3 between them. Using such close range wireless communication links 3 the mobile devices 28, 29 can exchange social networking information and files designated for sharing within their social networks as described in the various aspects.

The mobile devices 28, 29 within the network 10 may be capable of other types of communications, such as wireless communications via a cellular network in which mobile cellular devices 28, 29 are configured with an airlink for transmitting and receiving cellular signals 2 from/to a cellular base site or base station 16. In this example network 10, the base station 16 is a part of a cellular network that includes elements required to operate the network, such as a mobile switching center 18. In operation, the mobile switching center 18 is capable of routing calls and messages to and from the mobile devices 28, 29 via the base station 16 when the mobile devices 28, 29 are making and receiving cellular data calls. The mobile switching center 18 may also provide a connection to telephone landline trunks (not shown) during telephone calls, and to a server gateway 22 coupled to the Internet 24 for sending and receiving data to an Internet accessible server 26.

The various aspects enable mobile device users to create a social network for sharing digital information, such as documents, pictures, videos, and audio files, by bringing their mobile devices 28, 29 sufficiently close together (e.g., touch together) to establish a close range communication link. The limited range of the close range communication link provides users with security that their social network extends only to who are known personally to the members, such as family members and friends who they trust. Using such a proximity-initiated communication link, files designated for sharing within the social network can be communicated back and forth until each stores all of the designated shared files of the other. This sharing of files continues as each member of the network touches (or nearly touches) their mobile device 28, 29 to devices of other members of the network. In this manner friends and family, and similar social networks, can pass along photos, electronic post cards, chain letters, etc.

In order to establish a social network, some information about the network must be exchanged between the mobile devices 28, 29. Conventional social networks maintained on centralized servers in which the server maintains a list of members and which monitors the log-in of users. In contrast, a decentralized network enabled by the various aspects depends upon the mobile devices identifying the social networks to which they belong so that two or more mobile devices 28, 29 communicating via a close range communication link can discover if they are in a common network.

Information identifying a social network may be any data, such as numbers, letters, words, and combinations thereof, that users want to use. For example, users may identify a social network with a descriptive title such as "Smith Family." While users may use simple identifiers, mobile devices may be configured to append near-random numbers to minimize the likelihood that two unrelated social networks would have the same identifier, which could lead to unintended file sharing across the two unrelated networks. For example, a user may initiate a new social network by giving it the name "Smith Family" to which the user's mobile device may append a random number, such as 58135498513547 to yield: Smith_Family58135498513547.

In one aspect, such social network membership information may be stored in a file that can be exchanged between mobile devices 28, 29 communicating via a close range communication link. For example, the mobile devices 28, 29 may be configured to maintain a data file containing social network identification information and to exchange identifiers in this data file with other mobile devices when a close communication link is established. In this aspect, one or both mobile devices 28, 29 can compare a received social network identification list file to such a file stored in memory to determine if there are any matches.

Using the Smith Family example, when the user adds a family member to the Smith Family social network by touching the user's mobile device to the mobile device of a family member, the added mobile device may store "Smith_Family58135498513547" in its social network list data file. Then the next time the two mobile devices are brought close together one or both may exchange their social network list data file enabling the devices to discover that they share membership in the "Smith_Family58135498513547" social network.

Once two mobile devices 28, 29 in close range wireless communication identify a common social network membership, they may exchange files (e.g., documents, photos, etc.) that have been designated for sharing within the common social network. A variety of methods may be used for designating files to be shared within a social network, including storing such files in a particular "folder" in memory (e.g., a "Smith Family Photos" folder), adding a file extension to the file names (e.g., "pic 1.SmithFamily.jpg"), or appending an identifier to the file contents. In an aspect described more fully below, files are identified for sharing within a social network using metadata associated with each file.

Many file formats contain additional information about the file that is not viewed by the user in the typical usage scenario. Such information about information stored in a file is referred to in the digital information arts as "metadata." For example, a JPEG-formatted picture (i.e., a "JPEG file") often includes a portion of the file that is reserved for "comments" and other information about the picture. For example metadata associated with a JPEG picture may include the day and time that the picture was taken, as well as comments that users may add, such as a caption. The content of metadata, such as the JPEG comments field, may be ASCII-formatted text that contains information such as the software used to create the file or the copyright owner of the file. When such a JPEG picture is opened for viewing (e.g., as part of a web page), the comment field is generally not displayed. Thus, the content of the comment field might not affect the typical user experience. Nevertheless, the metadata is available to an application accessing that file. Various aspects take advantage of the existence and nature of metadata to store information related to social networking groups (e.g., designation that the file may be shared) within a file in a manner that does not interfere with or inhibit normal use of the file.

In another aspect, social networking information may be stored within the actual data of the file in a manner that is transparent to the user. Such a technique is known as "steganography" or "watermarking." For example, the image data of a JPEG file may be altered in a manner that adds text which can be extracted from the file. The original JPEG file and the altered (i.e., watermarked) JPEG file may be indistinguishable to a user viewing the images presented side by side. The hidden text included using steganographic methods is also referred to herein as metadata, even though it is data that is intertwined with the image data. For many file formats, there may not be a clear distinction between data and metadata. As used herein, "metadata" refers to any information about a digital file that can be extracted from the digital file.

Using metadata information regarding the social network or networks with which a particular file can be stored within the file itself. Thus, in this aspect, a mobile device may be configured to access each file's metadata to determine if it is to be shared with a member of a social network with which it has established a close range communication link. This aspect simplifies the process of designating files for sharing since the files need not be moved to a particular folder or renamed.

In a further aspect, metadata in files designated for sharing are used to identify both the mobile device social network membership and that the file is to be shared with the social network. Thus, when a user creates or joins a social network, the identifier of that social network may be added to the metadata of files identified for sharing with that network. For example, a user may create the "Smith Family" social network by selecting a photo (or other type of document) and designating it to be shared with that social network. The mobile device may be configured to edit the selected photo data file to add the social network identifier (e.g., Smith_Family58135498513547) to the file's metadata. The mobile devices may be further configured to exchange file metadata tags during a close range communication session to discover common social network membership. Thus, in this aspect, file metadata tags are exchanged instead of a social network list data record as describe in the preceding aspect. For example, two mobile devices of Smith family members are brought close together one or both may exchange the metadata tags on their stored files to enable the devices to discover that they share membership in the "Smith_Family58135498513547" social network. This process of sharing social network memberships for common membership discovery also enables discovery of the files designated for sharing within the social network at the same time.

A further issue associated with decentralized social networks enabled by the various aspects involves the potential of redundant file sharing. Once two mobile device that are members of a social network have exchanged files there is no need to exchange the same files the next time the two devices establish a close range communication link. However, some files may be added or modified in the meantime, so it would be desirable to exchange files that have been added or changed since the last exchange of files. This capability is provided in an aspect in which information about each file, such as a file identifier and, optionally, a version identifier, are also included in metadata to enable mobile devices to recognize new and modified files. Such identifiers may be conventional metadata information such as file names and date/time of last update. Alternatively, special social networking file/version identifier metadata may be appending to the file metadata. By configuring mobile devices to exchange metadata related to files designated for sharing in a particular social network, the mobile devices can discover the new or modified files present on the other device. Mobile devices can be configured to discover the new/modified files and only exchange the files that are not already shared. To do so, the mobile devices may exchange the portions of file metadata including the social network identifier, the file identifier, and the last-update day/time information. Receiving mobile devices can compare this information to the metadata of the files stored within its memory to select only those files (or versions of files) that are not stored in memory. This aspect is expected to speed the process of updating social network files between two devices after an initial synchronization with a social network.

In a further aspect, the metadata associated with a file may include information regarding the mobile devices through which the file has been passed. Thus, if a file has been transferred from a first mobile device to a second mobile device, and from the second mobile device to a third mobile device, the metadata on the file on the third mobile device may include information indicating that the file is already stored on the first and second mobile devices.

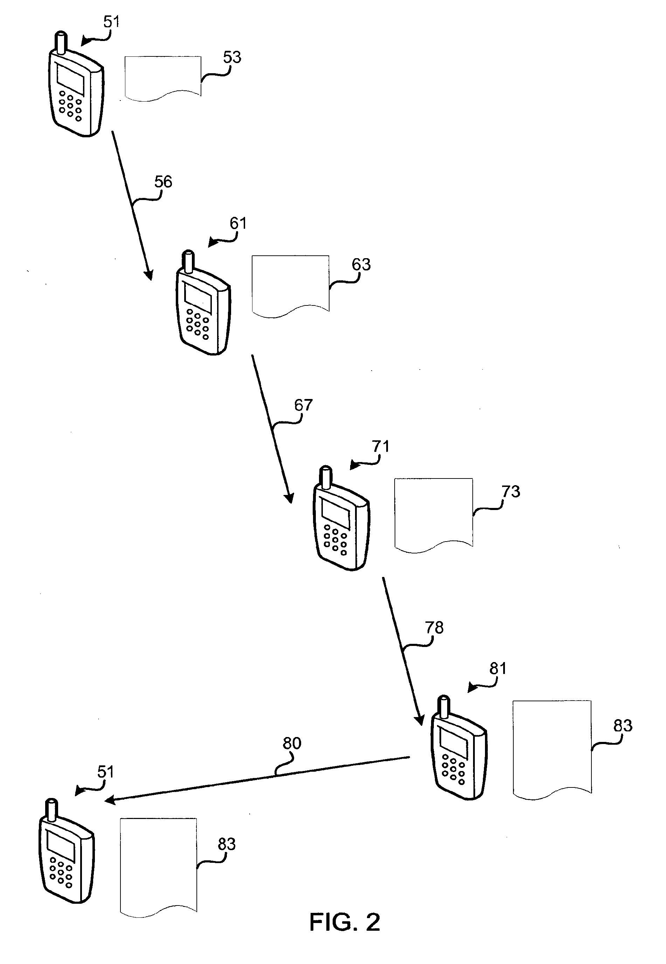

FIG. 2 shows an example of how metadata may be altered to reflect a social network that is established through file sharing. A first mobile device 51 may possess a digital file containing social networking metadata 53 corresponding to a user. The first mobile device 51 may share the digital file and its metadata 53 with a second mobile device 61 via a close range communication link 56. The second mobile device 61 may alter the digital file metadata 63 to reflect that both the first and second mobile devices 51, 61 possess the file. The second mobile device 61 may pass the file on to a third mobile device 71 via a close range communication link 67. The third mobile device 71 may further alter the digital metadata 73 to reflect that three mobile devices 51, 61, 71 possess the file. The file may be transferred a fourth time, from the third mobile device 71 to a fourth mobile device 81 via a close range communication link 78. The fourth mobile device 81 further alters the digital file metadata 83 to reflect that the four mobile devices 51, 61, 71, 81 are known to possess the file. The file on any of the mobile devices 51, 61, 71, 81 may be indistinguishable from the files on the other mobile devices when opened by an appropriate application (e.g., a photo display application). However, an application that can read the social networking information within the digital file metadata may reveal a different social network for each mobile device. In other words, the fourth mobile device 81 may know that the other three mobile devices 51, 61, 71 possess the same file while the first mobile device 51 may not know of the existence of the third and fourth mobile devices 71, 81. In an aspect, updates to social networking information stored in file metadata may be relayed between communicating mobile devices even if there is no need to exchange the file itself. For example, if the first mobile device 51 subsequently establishes a close range communication link 80 with the fourth mobile device 81, the fourth mobile device 81 may transmit its version of the digital file metadata 83 to the first mobile device 51. This exchange of metadata may be conducted without transmitting the file itself, since the first mobile device 51 already has the digital file stored in memory.

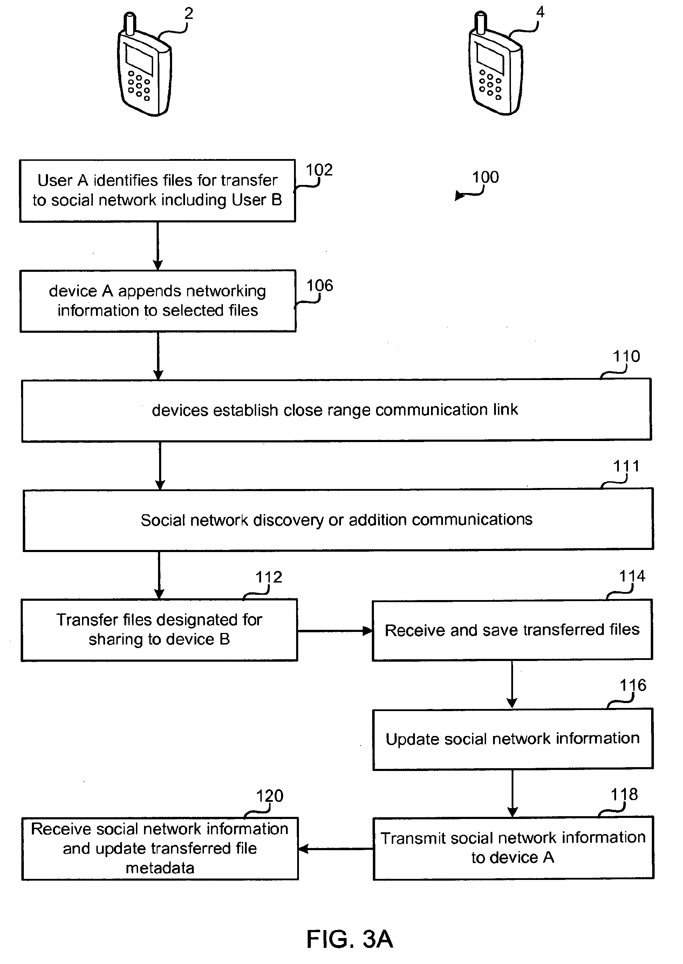

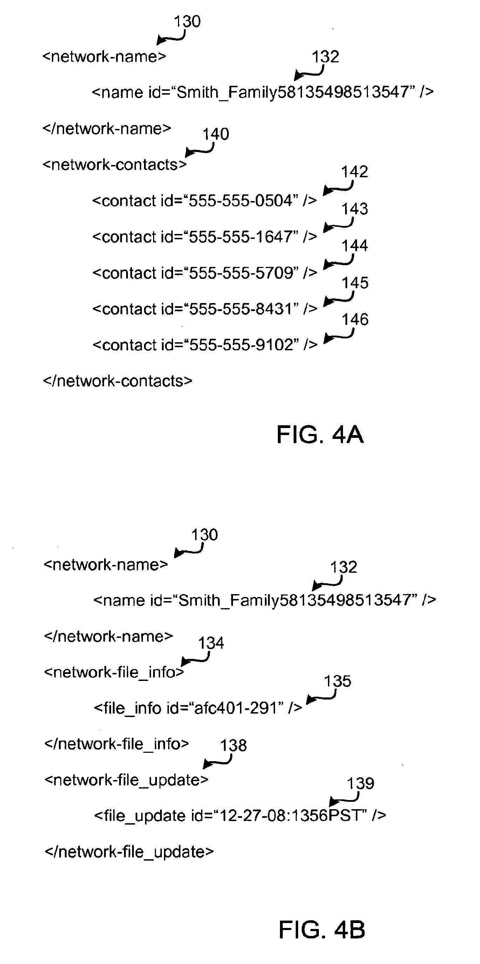

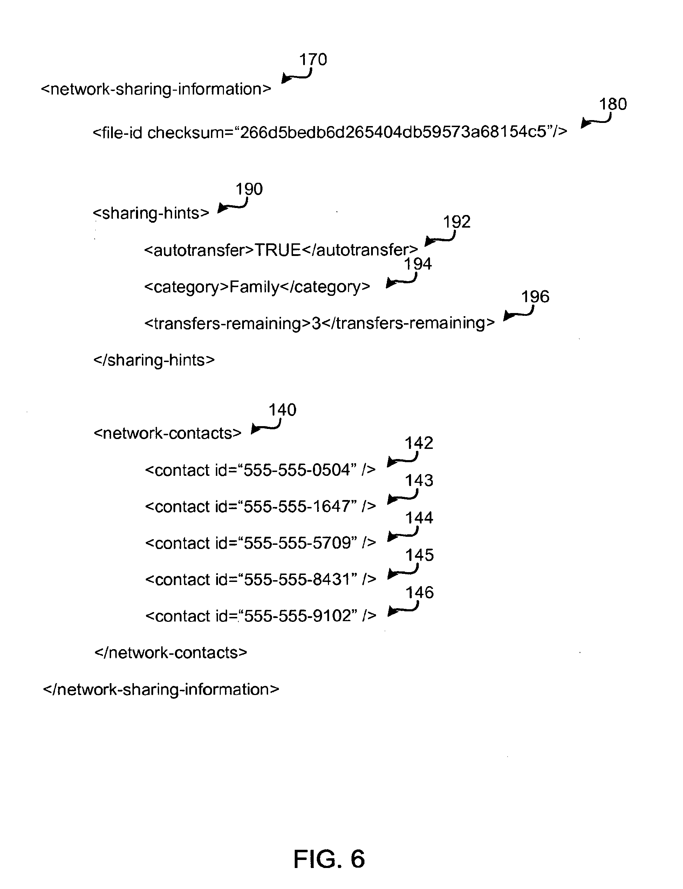

An example process 100 for exchanging files and social networking metadata between two mobile devices 2, 4 via a close range communication link, such as an NFC communication link, is illustrated in FIG. 3A. The transfer may occur between a first mobile device 2 which has stored in its memory one or more digital files, and a second mobile device 4 which has space in its memory to store the digital file. In block 102 of process 100 the user of the first mobile device 2 may use a menu option on the first mobile device 2 to identify or designate files to be shared with other mobile devices in the same social network. In block 106 this menu selection may cause the mobile device 2 to access indicated files, and create or update its social networking metadata if necessary. The content of the social networking metadata added to the files' metadata may include an identifier for the mobile device 2 as well as other information. The possible content of the social networking metadata at various points during the process shown in FIGs. 3A-3C is discussed more fully below with reference to FIGS. 4 and 6.

In block 110 the users may initiate a social networking exchange of information by bringing their two mobile devices 2, 4 into close proximity so that a close range communication link, such as an NFC communication link, is established between the devices. The mobile devices 2, 4 equipped with wireless close range communication transceivers, such as NFC protocol transceivers, may be configured to automatically establish a close range communication link as soon as the devices are within communication range (e.g., about 8-10 inches in the case of NFC protocol transceivers). Alternatively, one or both of the mobile devices may be configured so that a user is required (e.g., pressing a button or making a menu selection on their mobile devices 2, 4) before a close range communication link will be established. Requiring both a user action and bringing mobile devices 2, 4 into close proximity can protect against inadvertent social network exchanges, such as might otherwise happen in a crowded elevator, for example. The handshaking communication exchanges involved in establishing a close range communication link may be specified in the associated protocol. For example, the handshaking exchanges to establish an NFC communication link are well known and specified in the NFC protocol. For aspects that use other forms of close range communication links (e.g., Bludooth®, Zigbee®, range-limited WiFi, etc.), thc handshaking communication exchanges involved in establishing the close range communication link will be in accordance with the particular signailing protocol employed.

Once the close range communication link is established, in block 111 the mobile devices 2, 4 may exchange social network information between each other sufficient to enable one or both devices to discovery and agree upon a social network to which both two devices belong. In the situation where the users are initiating a social network or adding a new device to an established social network, this communication exchange may involve transmitting the social network identifier and related information from the member mobile device 2 to the mobile device 4 being added to the network. Thus, users can quickly create a social network by creating a social network identifier on a first mobile device 2, and then adding other mobile devices to the network simply by touching or nearly touching the devices together. In an aspect, in block 111 some user action may also be required to add a mobile device 4 to a social network, such as activation of a button or user menu in order to enable the social network addition communications.

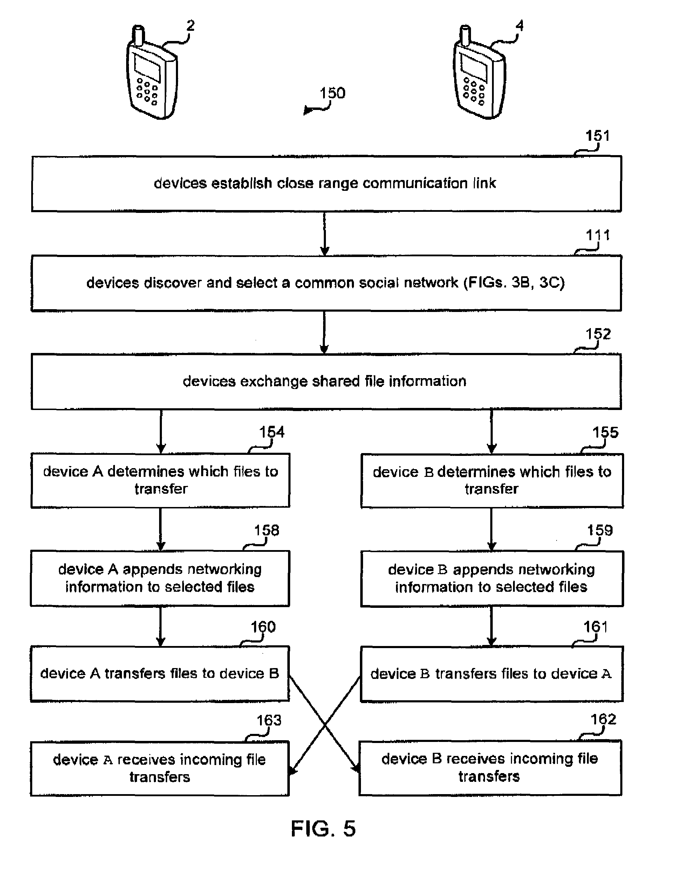

In the situation where the close range communication link has been established between two mobile devices 2, 4 which are both members of at least one established social network, the information exchange in block 111 may enable discovery of common network memberships. For example, in one aspect, the mobile devices 2, 4 may exchange a social network list datafile from one to the other (i.e., either one-way or both ways). In this aspect, the mobile device 2, 4 receiving such a social network list datafile may compare the social network identifiers in that list to the social network identifiers in its own social network list datafile stored in memory to identify common memberships. In another aspect, the mobile devices 2,4 may exchange a social network metadata stored in data files designated for sharing. In this aspect, the mobile device receiving such metadata may compare social network identifiers within it to social network identifiers included in its own file metadata to discover common memberships. A variety of methods may be implemented to discover the common social networks and agree on a particular common network, two examples of which are describe more fully below with reference to FIGs. 4 and 5.

Once the mobile devices 2, 4 have agreed on a common social network, in block. 112 the first mobile device 2 may transmit the files designated for sharing over the close range communication link. In block 114 the second mobile device 4 receives the files and may store them in memory. In some aspects, initiating a file transfer may include a series of communications that occur between the mobile devices 2, 4 after the close range communication link is established (i.e., in block 110) but prior to transmitting the file (i.e., in blocks 112, 114).

Once the second mobile device 4 has received and saved the file or files in block 114, in block 116 it may update the social networking metadata on its local copy of the transferred file or files to reflect the social networking information corresponding to the second mobile device 4. In block 118 the second mobile device 4 may also send identifying information to the first mobile device 2 over the close range communication link, which in block 120 the first mobile device may use to update the social networking metadata on its copy of the file. Such updates to the social networking metadata are optional and may not be implemented in all aspects.

It should be noted that while FIG. 3A shows and is described above as a first mobile device 2 transmitting files to a second mobile device 4, the same processes may be implemented to transmit files designated for sharing on the second mobile device 4 to the first mobile device 2. Thus, processes described above with reference to in blocks 112-120 of process 100 may also be performed in a similar manner to transfer files in the other direction. In this manner, at the end of the communication session, both mobile devices 2, 4 will have copies of all documents designated for sharing that existed on either of the devices before the file exchange process was initiated.

The optional updates to social networking metadata during file sharing illustrated in blocks 116-120 of process 100 shown in FIG. 3A may provide useful features for members of the network. For example, the updates to the social networking metadata may include information about the source of the received file. This aspect would enable members to determine who within the network provided them particular shared files. As another example, social networking metadata updates may also include information regard which members of the social network are known to possess a particular file. This aspect would enable members to identify who in their social network has not yet received a particular file. Such metadata information may support member interactions and collaborations that make social networks popular. For example, a first member of a social network may determine that a second member has not seen a particular photograph. This provides the first member a reason to share the photograph with the second member. The social networks enabled by the various aspects require members to bring their mobile devices into close proximity to share files, so the first member must visit the second member to share the photograph. For example, in the Smith Family social network, a son may determine that his mother has not received a picture of the son's niece (i.e., the mother's granddaughter), so the son may be motivated to pay his mother a visit to share the picture with her. As another example, the data file may be an electronic greeting card that network members get together to share and exchange. Thus, the ability to determine the members who have or have not received shared files combined with the need to establish close proximity in order to exchange files provides incentives for members to visit each other, thereby enhancing social bonding.

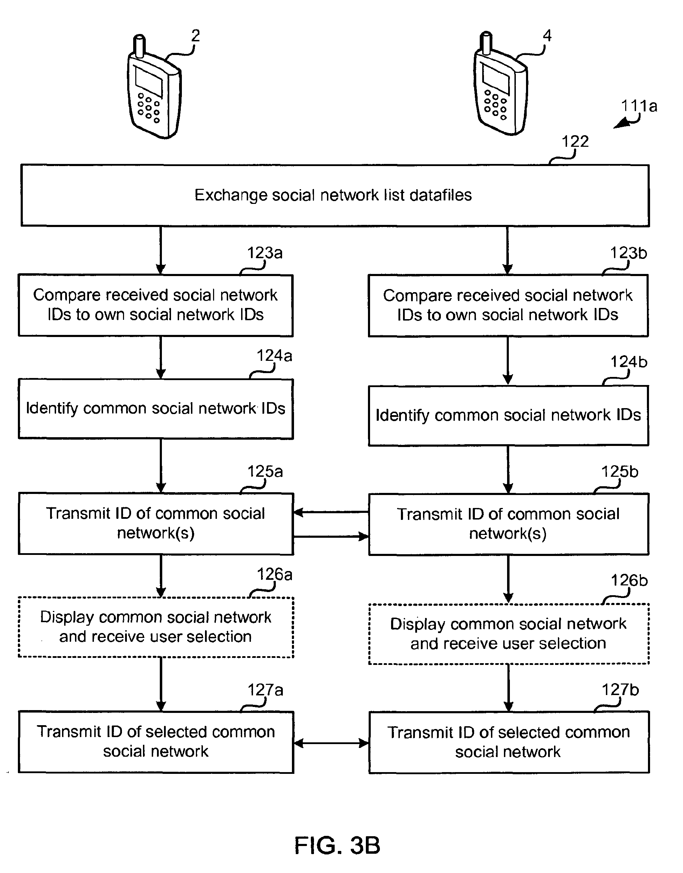

As mentioned above, in block 111 of process 100 a variety of methods may be used to discover and select a social network common to two (or more) mobile devices. In one example method illustrated as process 111a in FIG. 3B, process 111a may begin in block 122 with the exchange of a social network list datafile from one mobile device to the other. In one aspect once mobile device 4 sends its social network list datafile to the other mobile device 2 so that membership discovery can proceed in the receiving device. In an alternative aspect both mobile devices 2, 4 transmit their social network list datafile to the other so that membership discovery can proceed in parallel in both mobile devices. In block 123a, 123b a mobile device 2, 4 receiving a social network list datafile may compare the social network identifiers within the received datafile to the identifiers within its own social network list datafile stored in memory to identify in block 124a, 124b matching identifiers. The mobile device 2, 4 may transmit the matching social network identifiers to the other mobile device iu block 125a, 125b. In an aspect in which the social network list datafiles are exchanged and both mobile devices 2, 4 compare received file identifiers to their own datafile, the communication of common social network identifiers in block 125a, 125b may be optional since both mobile devices 2, 4 will discover the same common memberships.

Since users may be members of multiple social networks there is a possibility that the users' mobile devices discover more than one common social network. In this case it may be desirable to select a single social network for file sharing to avoid files designated for one network "leaking" into the other social network. A variety of methods may be used to select one of multiple common networks. For example, in one aspect social networks may be prioritized by users, in which case the mobile devices 2, 4 may select the one common social network with highest priority to both users. In another aspect, in blocks 126a, 126b the mobile devices may be configured to present a display identifying to the users the common social networks so that one or both of the users may select one, optional. In blocks 127a, 127b the mobile devices 2, 4 may receive the user input(s) or otherwise determine a preferred single common social network and transmit its identifier to the other mobile device. In block 127a this selection process may be performed in one of the devices, in which case the deciding mobile device 2 transmits the selected identifier to the other mobile device,. Alternatively, in blocks 127a, 127b the selection process may be performed in both devices with each transmitting the identifier of the preferred common social network. If the two preferences transmitted in blocks 127a and 127b are the same, then the process of exchanging files designated for sharing within the selected social network may proceed as described above with reference to blocks 112-120 in FIG. 3A. If the two preferences transmitted in blocks 127a and 127b are different, this conflict may be identified to the users, such as by repeating optional blocks 126a, 126b, selecting one of the preferences over the other, or another arbitration method.

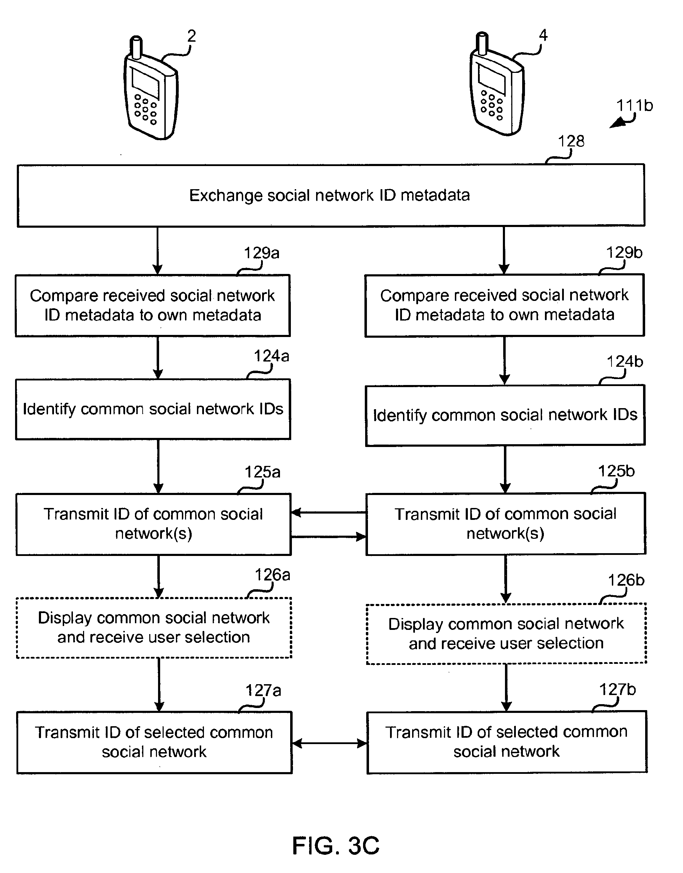

In an alternative aspect illustrated in process 111b shown in FIG. 3C, the common network membership discovery process may begin with the exchange of a social network information contained within shared file metadata in block 128. As with the preceding aspect, such file metadata may be transmitted by one mobile device 2 or 4 to the other, or may be mutually exchanged. In this aspect, the social network identifier is stored within the file metadata, obviating a need for a separate social network list datafile. In this aspect each file designated for sharing includes metadata identifying the particular social network or networks with which it is to be shared. If a particular file is designated to be shared with multiple social networks, such as may be the case with an electronic business card or "Vcard," then the identifiers of each of the multiple social networks may be included in the file's metadata. In blocks 129a, 129b a mobile device 2, 4 receiving a social network metadata may compare the social network identifiers within the received metadata to the identifiers within the metadata of files stored in memory and in block 124a, 124b identify matching identifiers. In block 125a, 125b the mobile device 2, 4 may transmit the matching social network identifiers to the other mobile device. In an aspect in which the file metadata are exchanged and both mobile devices 2, 4 compare received metadata identifiers to their own file metadata the communication of common social network identifiers in block 125a, 125b may be optional since both mobile devices 2, 4 will discover the same common memberships. Similar to the aspect described above with reference to FIG. 3B, in optional blocks 126a, 126b the mobile devices may be configured to select a single social network if more than one common network is identified, such as by displaying the common networks to the user and receiving a user selection. In block 127a, 127b a selected common social network identifier may be communicated between the mobile devices 2, 4, after which the process of exchanging files designated for sharing within the selected social network may proceed as described above with reference to blocks 112-120 in FIG. 3A.

The metadata used to convey social networking information may be very simple in structure. In some aspects, the metadata may include one or more social network identifiers and a series of contact identifiers corresponding to those network members who are known to possess or have possessed the file. An example of such a metadata structure is illustrated in FIG. 4A which shows an "XML fragment" (i.e., a text string that complies with the syntax rules of the well-known Extensible Markup Language) that may be stored as ASCII data within a digital file or as metadata appended or linked to the file. The network and contact identifiers that establish the social network may be represented as an XML element 132 of the type "name" with a parent element 130 of the type "network-name," and a series of XML elements 142-146 of the type "contact" with a parent element 140 of the type "network-contacts." An aspect that recognizes this format for social network metadata may identify files as part of a social network by searching the comment field of a JPEG file for the text string "<network-names>" or "<network-contacts>" for example. The data structure shown in FIG. 4A uses a unique name or identifier for the social network and a phone number to identify each member of the social network that has or had the file to which the metadata is appended. Using the metadata illustrated in FIG. 4A, a mobile device can identify all members of the social network that have a particular file by accessing the contact identifiers. In some aspects, the use of a phone number may present a privacy concern. Accordingly, the contact identifiers may be cryptographically obscured versions (e.g., an MD5 hash) of the phone number or simply a nickname of the user. In other aspects, publicity rather than privacy may be a concern. In such an aspect, contact information may more closely resemble a full address book entry. Because of the flexibility of the XML language, the type of social network identifier and contact information for a given contact can vary within the same file. For example, a file with embedded social networking information may have some contacts identified by phone numbers, some by a nickname, and some by name and address.

Another example XML language metadata structure is illustrated in FIG. 4B which may be used in an aspect which includes file name and version number within the social networking metadata instead of a list of individuals who had possession of the file. This example data structure includes social network identifier elements 130, 132, file name elements 134, 135, and update date/time elements 138, 139. It should be noted that the file name 135 included in the metadata may be different from the file name under which the file is stored in memory, such as to reflect a file name used commonly within the social network. Upon receiving the metadata illustrated in FIG. 4B, a mobile device can determine whether it already has the file in memory by comparing the file name and update information to metadata of files stored in memory.

In a further aspect, the social networking metadata included with files designated for sharing may include all the elements illustrated in FIGs. 4A and 4B. Thus, the metadata may identify the social network for which sharing is authorized, the file name used in the social network, file update information, and identifiers for all members of the social network known to have or once had the file.

The XML format example data structures shown in FIGs. 4A and 4B are for illustrative purposes only. One of skill in the computer arts would understand that a variety of different data structures and languages may be used to generate and store metadata implemented in the various aspects. Further, the types of metadata may include other industry standards such as Exchangeable Image File Format and Extensible Metadata Platform.

Some aspects may automate the process of sharing files. For example, a user may wish to automatically share all photographs of his family with other members of his family. An overview process of such an aspect is illustrated in FIG 5. An automated file-sharing process may be triggered by the establishment of a close range communication link between two mobile devices 2, 4 which are configured for automatic sharing in block 150. As mentioned above, known communication protocols may be implemented to enable the automatic establishment of close range communication links. In some aspects, the two mobile devices 2, 4 may also exchange a series of communications over the close range communication link to confirm that the mobile devices are capable of automatically transferring files. With the close range communication link established, the two mobile devices 2, 4 may exchange social network information (e.g., a datafile or metadata containing social network identifiers) and perform the process of discovering and selecting a common social network as illustrated in processes 111a or 111b, for example. This process may proceed as described above with reference to FIGs. 3B and 3C. Once a common social network is selected, in block 152 the mobile devices may exchange information regarding their files designated for sharing within the selected social network. As noted above, this process may involve exchanging a list of files and file versions of files stored in memory that have been designated for sharing with the selected social network, such as the metadata illustrated in FIG. 4B. Alternatively, a mobile device 2, 4 may receive the identifier of the other connected mobile device or device user, such as a telephone number which can be compared to the identifiers in the metadata of files designated for sharing with the selected social network, such as the metadata illustrated in FIG. 4A.

In block 154 the received file information can be used by the receiving mobile device 2, 4 to determine the files to be transmitted to the second mobile device 4. In determining the files to be transferred the mobile device may identify those files stored in memory designated for sharing with the selected social network which are not present on the other mobile device. For example, the mobile device may receive metadata of the shared files possessed by the other mobile device, and use this information to determine which of the files in its memory are not included in the received metadata. As another example, the mobile device may identify for transfer those files in memory whose metadata does not include the identifier of the other mobile device. In addition to determining which files will be transferred, in block 158 the first mobile device may also update the social networking metadata of the various files to reflect the networking information corresponding to mobile device 4 to which the files will be sent. In block 162 the mobile device 2 may transfer the determined files to the other mobile device 4, which are received by the other mobile device 4 in block 166. In some aspects, the process of automatic file sharing may be symmetric so that both devices send files and receive files as illustrated in blocks 155, 159, 161, and 163.

While the foregoing aspects describe social networks that are created by a user, mobile devices may also be configured to automatically create a social network by sharing files and device information when a close range communication link is established with another mobile device. In this aspect, the criteria used by a mobile device for selecting files to share may be a combination of information known about the user of the second mobile device 4 and the information known about the contacts and social networks of the tiles stored in the memory of the first mobile device 2. For example, the mobile device 2 may be configured to recognize another mobile device 4 as belonging to a social network such as by recognizing that device's phone number is stored in the mobile device's address book and categorized as "family." Thus, a user's address book may be used to identify the members of a social network as those having a common categorization. The mobile device 2 may also recognize one or more photographs stored in its memory as being family photos, such as based on common file names or a common file folder. Such recognition may also be based on a portion of the various photo's social networking metadata that explicitly categorizes the photo as "family," such as illustrated in FIG. 4B. Alternately, the mobile device 2 may be configured to recognize a family photo as any photo that includes a certain person (e.g., a parent of the user), such as by using facial recognition processes. In such an aspect, mobile devices may automatically share files received from one family member with all other family members with whom a close range communication link is established.

Mobile devices may also be configured to discover the existence of social networks based upon the metadata included in shared files. Thus, if a mobile device has stored in memory a file with metadata such as that illustrated in FIG. 4A, the mobile device may recognize a social network spanning all contacts listed in the metadata even if the user knows only one or two. For example, a mobile device belonging to person A may recognize that person B and person C know each other if the shared file includes metadata showing that a particular file shared by person B received the file from person C. In that case, when the mobile device of person A establishes a close range communication link with the mobile device of person B, the mobile device of person A may automatically transfer all files received from person C. This type of automated file sharing may facilitate an indirect categorization of files. For example, an aspect with this type of functionality may facilitate sharing class notes with other people in a class without having to recognize or consider the nature of the file or the nature of the social network.

Some aspects, including those that employ automatic file sharing, may include further social networking information in file metadata. An example of such metadata is illustrated in FIG. 6. In addition to the contact identifiers represented as a series of XML elements 142-146 of the type "contact" with a parent element 140 of the type "network-contacts," meta data may include a further parent element 170 of the type "network-sharing-information." This parent element 170 may have other children such as an XML element 180 of the type "file-id" that mobile devices can use to identify the file being shared. Mobile devices and other computers may uniquely identify a file using the size of the file or an md5 checksum. Two files of the same name and same size may appear identical, but two files that have identical content but different metadata may not have the same size or checksum. Aspects that provide metadata corresponding to the md5 checksum of the binary data portion of the file may recognize that two files have the same content regardless of any differences in the metadata. Some aspects may identify a file through other metadata. For example, a file may be identified by its last-modified timestamp (such as illustrated in FIG. 4B) combined with the author or originator of a file, all of which may be included in the file metadata. Similarly a sound recording file may be identified by the artist and title information in the metadata. As described above with reference to FIG. 5, uniquely identifying files designated for sharing may enable mobile devices to transfer only those files not already stored in the other mobile device. In such an aspect, a list of files with social networking metadata may be exchanged described above with reference to process 150 block 152 in FIG. 5. Alternatively, the process of transferring files (i.e., in blocks 162 and 166 collectively) may include transferring mobile device identifies to the receiving mobile device files to be sent to which the receiving mobile device responds by accepting or rejecting individual files such that only the accepted files are transferred in block 162.

Aspects that provide for automatic file sharing may also provide additional information to assist a determination whether to share a file. An XML parent element 190 of the type "sharing-hints" illustrated in FIG. 6 may be used to provide such information. As previously discussed, some aspects may allow users to designate files for sharing using categories that correspond to contact categories in a user's address book (e.g., family, school, soccer team, work, etc.). Such an aspect may be enabled by including one or more XML Elements 194 of the type "category" within the social networking metadata. Some aspects may also provide for user to specify which files should be automatically shared when appropriate. Another example XML element 192 is of type "autotransfer" metadata indicating that the file can be transferred without further user action. For this example metadata element possible values may be a simple true / false (i.e., Boolean values), or may be values that provide hints for determining whether to autotransfer, such as a category (i.e., "family"). Alternatively, an autotransfer XML element 192 may be part of a category XML element 194, or have child XML elements that provide more specific automatic sharing rules. As a further example, a file may have an autotransfer XML element 194 with "true" in addition to an autotransfer XML element 194 with value false that is part of a category XML element 194 with value "client." Such an arrangement may allow a mobile device to automatically share the file with anyone except those it recognizes as clients.

In a further aspect, file metadata may include limits on the number of times a file can be shared. For example, a user may wish to share a photo, but only to users within three degrees of separation (i.e., his friends, his friends' friends, and his friends' friends' friends). To implement this restriction, the metadata may include an XML element 196 of the type "transfers-remaining" that can store integer values and function as a decrementing counter. The "transfers-remaining counter is decremented by a mobile device each time a file transfer is made by a recipient mobile device with the decremented count included in the metadata attached to the shared file. When the transfers-remaining counter equals zero a mobile device would decline to share the file further. As another example, a user wishing to share notes from a class may restrict the number of sharing steps to prohibit any further sharing.

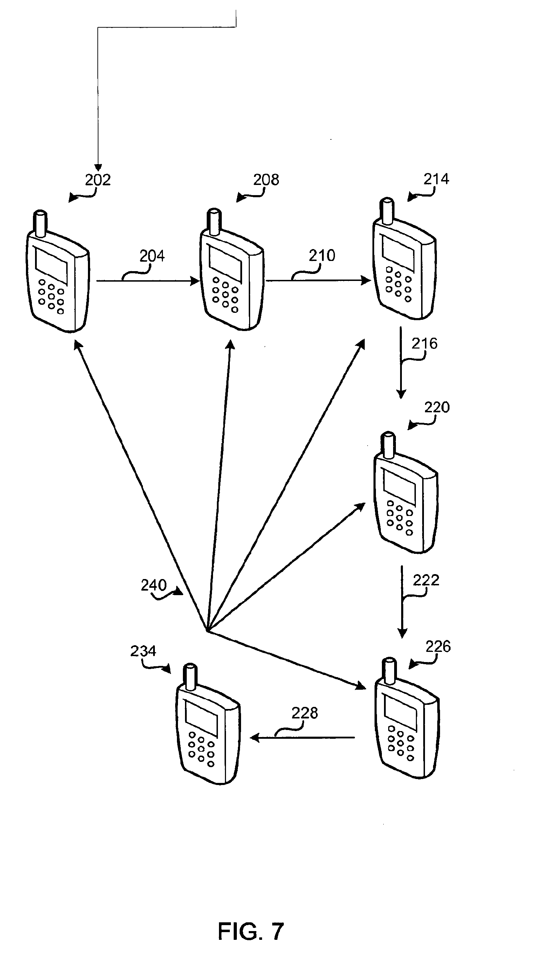

While the forgoing aspect described social networks identified by a user or linked to categories of contacts known to a user, the various aspects may also be used to discover social networks based upon common interests related to shared files. Thus, the social networking information included in a file metadata can be used to discover other members of a potential social network. This aspect is illustrated by considering the example illustrated in FIG. 7. A first user having a sound recording of a local band stored on his mobile device 202 may wish to notify other people interested in the band of an upcoming show, or pose a question about a song that the band played during the show. Since the first user's mobile device 202 has an original copy of the sound recording file, the file's metadata does not include embedded social networking information. Using a file transfer application that recognizes and creates social networking metadata, that user may transfer the audio file to another user's mobile device 208 via a close range communication link 204. This process establishes a social network of two persons sharing the file. The second user 208 may then transfer the file to another user's mobile device 214 by another close range communication link 210, thereby growing the social network defined by the shared song file. There may be a further series of file sharing transfers, communications 216, 222, 228, thereby adding additional mobile devices 220, 226, and 234 to the social network. In aspects using file transfer processes and metadata structures similar to those described above with reference to FIGs 3-5, the file received by the final user's mobile device 234 may contain contact information in the metadata for all the mobile devices 202, 208, 214, 218, 226 in the chain of file transfers. In an aspect particularly suited to mobile devices, the social networking information in the metadata may include a telephone number of each mobile device 202, 208, 214, 218, 226. In such an aspect, the ultimate recipient of the shared file, i.e., mobile device 234, could communicate with any or all of the other mobile devices 202, 208, 214, 218, 226 in this social network defined by the commonly shared file, such as via a broadcast text message or SMS communication, communication 240. Alternatively, the communication 240 from the last mobile device 234 to the other mobile devices 202, 208, 214, 218, 226 may be via email, other types of TCP/IP based protocol, or a combination of various communication protocols. Thus, in this example, even though the first person 202 only knew one other person interested in receiving the song file, the sharing of that song lead to the discovery of a social network spanning mobile devices 202, 208, 214, 218, 226 and 234 connected together by shared contact information included in the file's metadata.

In an aspect, the contact information in the social networking metadata may specify the preferred communication protocol for communications within the social network. In some aspects, the preferred communication protocol may depend on the context of the message. For example, a user may prefer to receive advertisements via SMS while preferring to receive content updates via email. Such preferences may be recorded in the file metadata so they are communicated to all members of the social network. Further, some aspects may combine social networking information stored in metadata of a given file with contact information stored in the address book of a mobile device to determine the proper protocol or protocols for intra-network communications.

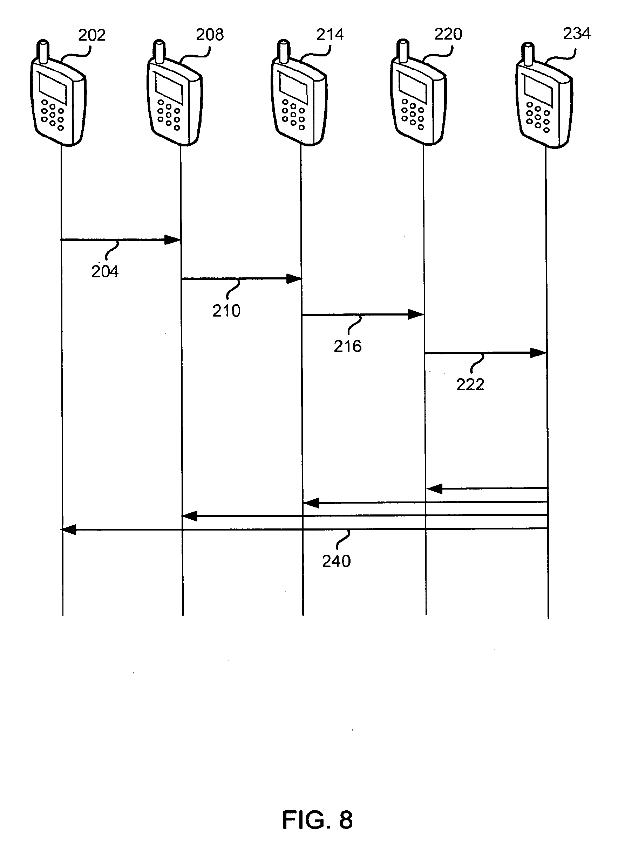

The series of communications resulting in the social network illustrated in FIG. 7 are illustrated in FIG. 8. The first user's mobile device 202 shares the file with the second user's mobile device 208 via communication 204. The file may then be passed on to a third user's mobile device 214 via communication 210, a fourth user's mobile device 220 via communication 216, and a fifth user's mobile device 234 via communication 222. In an aspect in which the file transferred in each of the communications 204, 210, 216, 222 includes updated metadata storing social networking information, the fifth user's mobile device 234 may end up knowing the contact information for the previous four users' mobile devices 202, 208, 214, 220. Using this information, the fifth user's mobile device 234 may send a broadcast message to the rest of the social network, communication 240.

The example illustrated in FIGs. 7 and 8 is a linear sharing scenario in which each user shares the file with only one other user. More likely some users will share files multiple times as illustrated in FIG. 8. In this example scenario, the first user's mobile device 202 shares a file with a second user's mobile device 208 via communication 204, but the second user shares the file with a third user's mobile device 214 via communication 210, and with a fourth user's mobile device 220 via communication 215. The third user may share the file with a fifth user's mobile device 234 via communication 222. Since the fifth user received the file in a chain of transfers that bypassed the third user's mobile device 214, the fifth user's mobile device 234 can send a broadcast message to the social network, communication 242, but it cannot address the third mobile device 214. In an aspect, mobile devices within a social network in which a user 208 has shared the file multiple times may recognize that the broadcast message did not reach the entire social network, such as by examining the addresses in the broadcast message. In such an aspect, the mobile device 208 possessing the address for the bypassed social network members may forward the message on to those user's mobile devices 214, communication 243.

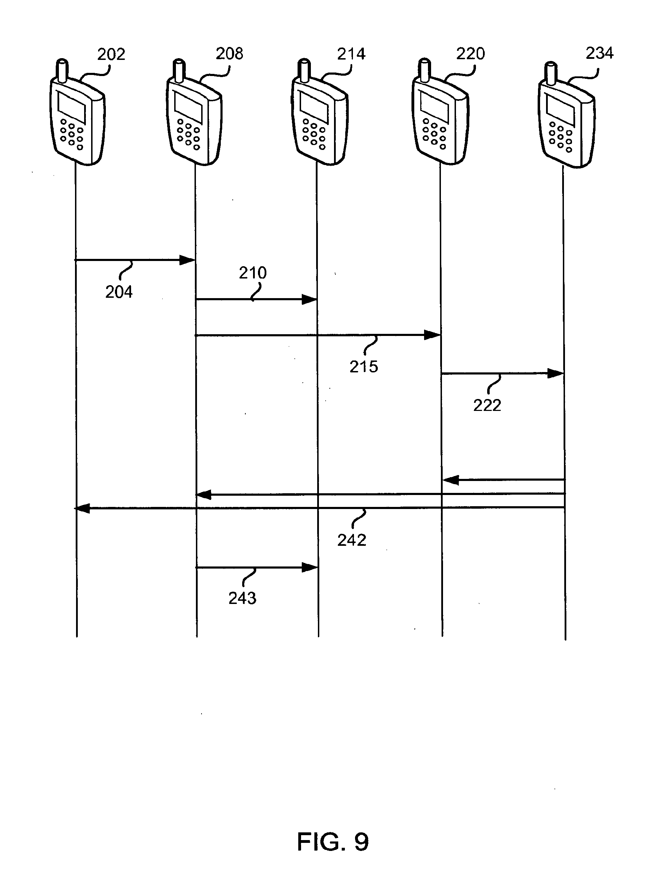

A broadcast communication 240 may be communications targeted at the user, such as in the previously discussed example of an advertisement for a concert. Some aspects may enable users to send broadcast communications to update the metadata of a shared file and/or a social networking information file. As previously discussed with reference to FIGs. 2 and 8, the social networking information of a file may change as it is transferred through a social network, becoming asymmetrical with further transfers so that not all members of a social network may recognize all the other members. For example, referring to FIG. 9, after communication 210, the original user's mobile device 202 may only know of one other user's mobile device 208, while the second user's mobile devices 208 knows of three users' mobile devices 202, 214, 220. The second user's mobile device 214 could send a message to the first user's mobile device 202 notifying it that the social network has expanded update the social networking metadata of the corresponding file. But this would require transmission of such messages each time the file is transferred. To address this, an aspect may use broadcast messages to update the social network information across the social network. For example, when the fifth user's mobile device 234 sends the broadcast communication 242 to all network members it knows of, the first user's mobile device is updated with the social network information in the broadcasts. While that broadcast left out the third user's mobile device 214, subsequent broadcasts by the second user's mobile device 208 would update the entire social network.

In addition to updating the social network, some aspects may use broadcast messages to update the content of the file metadata. For example, a file may contain an outline prepared for an exam, and that file may be shared among a study group. When a user saves changes to a file, the mobile device could send a broadcast communication to all members of the social network defined by the shared file (i.e., the study group) that contains the user's changes. When a broadcast message with changes is received, the receiving mobile device may be configured to merge the changes into its copy of the shared file.

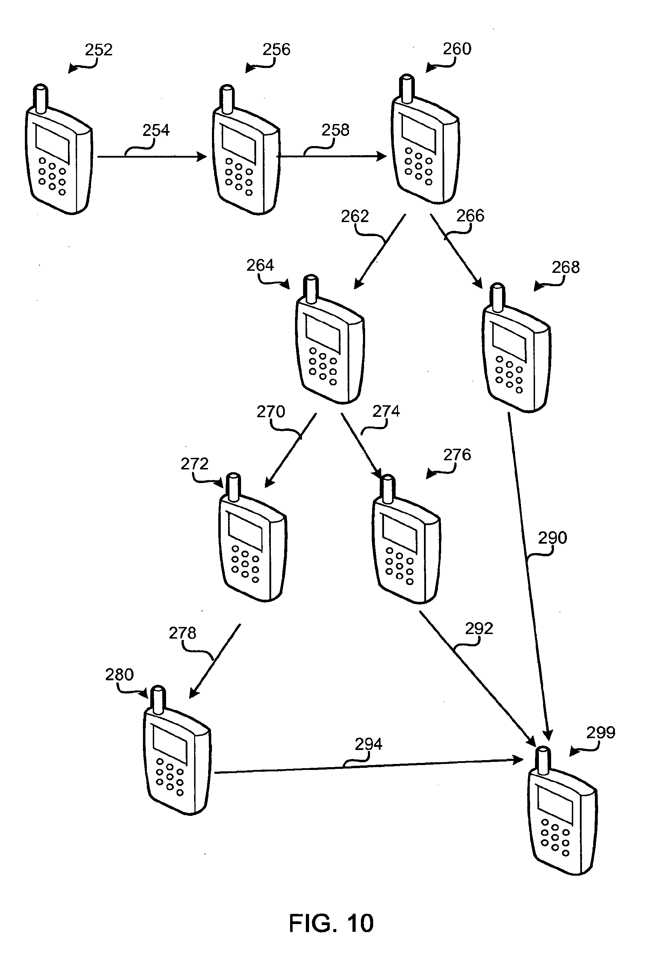

Another example of how a file may be changed as it moves across a social network is shown in FIG. 10, which shows actors and communications in an example social network. In many offices it is common for co-workers to pass around greeting cards (e.g., a birthday card) for everyone to sign. The various aspects enable an electronic greeting card to be processed in a similar manner. A first user may create a digital greeting card on a first mobile device 252 including a personal message, and pass the card on to a second user's mobile device 256 via communication 254. That user 256 may add a personal greeting and pass the card on to a third user's mobile device 260 via communication 258. The third user may add a greeting and pass on the card to another users' mobile device 268 via communication 266. That user may add a greeting but not wish to continue sharing for some reason. The non-sharing user's mobile device 268 may transfer the file to the mobile device 299 of the user who is designated to receive the final version of the card via communication 290. The designation may be part of the social networking metadata or may simply be well-known in the office as the person who handles greeting cards. In aspects that utilize methods for merging inconsistent versions of files, the process of sharing the card may happen in parallel such as when some users share the card multiple times. For example one of the users (260) in FIG. 10 shares the greeting card with a second user's mobile device 264 via communication 262. This sharing may continue in a manner such that other users 272, 276, 280 receive the greeting card in parallel, communications 270, 274, 278. When there are no users left that have not digitally signed the card, the users who have not shared may transmit their versions of the greeting card to the terminal user's mobile device 299 via communications 292,294. The terminal user's mobile device 299 may then compile the various versions into a single electronic greeting card that can be passed to its intended recipient in a similar device-to-device file transfer (not shown).

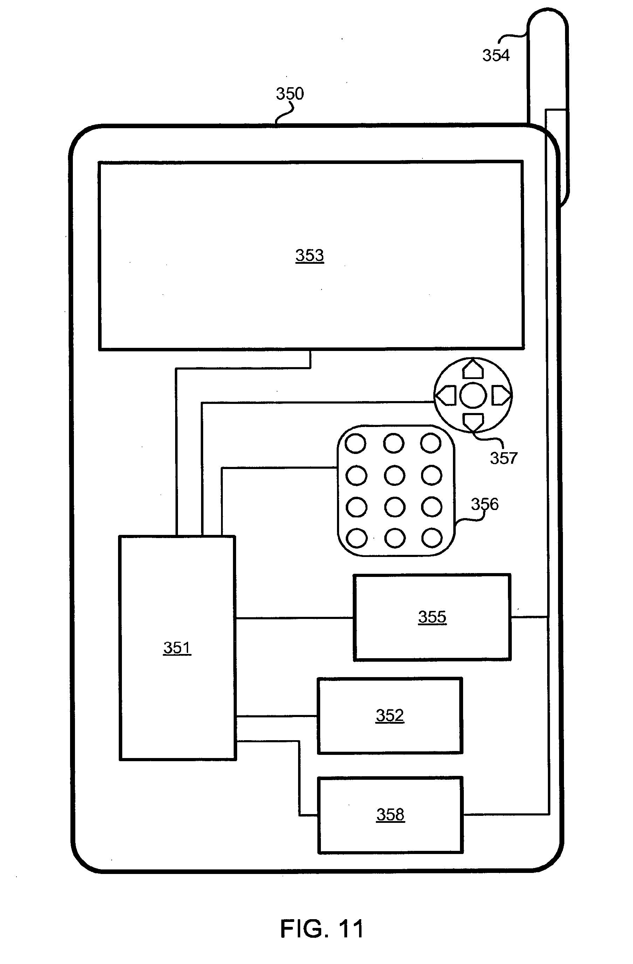

The aspects described above may be implemented on any of a variety of mobile devices, such as, for example, cellular telephones, personal data assistants (PDA) with a close range wireless communication capability, mobile electronic mail receivers, mobile web access devices, and other processor equipped devices that may be developed in the future that recognize digital files with various metadata. Typically, such mobile devices will have in common the components illustrated in FIG. 11. For example, the mobile device 350 may include a processor 351 coupled to internal memory 352 and a display 353. Additionally, the mobile device 350 will have an antenna 354 for sending and receiving electromagnetic radiation that is connected to a close range wireless communication transceiver 378, and may also be connected to a wireless data link and/or cellular telephone transceiver 355 coupled to the processor 351. Mobile devices typically include a key pad 356 or miniature keyboard and menu selection buttons or rocker switches 357 for receiving user inputs. Mobile devices also typically include a speaker 358 for ringing or reproducing the caller's voice and a microphone 359 for capturing the user's voice to send to the caller.

For use in the various aspects the mobile devices 350 will include a close range transceiver 378 coupled to the processor 351 capable of establishing and communicating close range wireless communication link using one of the near field communication protocols. The close range communication transceiver 378 may be any of a number of different known transceivers capable of transmitting and/or receiving data in accordance with any of a number of different close range techniques and protocols, such as defined in the NFC, Bluetooth^{®}, IEEE 802.14.4, and IrDA protocols or other standards. For example, the close range transceiver may be an NFC protocol transceiver, a NFCIP-1 or NFCIP-2 transceiver, an RFID transceiver, a Bluetooth^{®} (i.e., communication in the 2.4 GHz frequency band) transceiver, an infrared (e.g., IrDA) transceiver, an IEEE 802.14.4 transceiver, an UWB (Ultra Wideband) transceiver, or a longer range wireless communication transceiver implementing range limiting methods (e.g., transmission power restrictions or round-trip-time limitations).

The processor 351 may be any programmable microprocessor, microcomputer or multiple processor chip or chips that can be configured by software instructions to perform a variety of functions, including the functions of the various aspects described above.

Typically, software applications may be stored in the internal memory 332 before they are accessed and loaded into the processor 351. In some mobile devices, the processor 351 may include internal memory sufficient to store the application software instructions. For the purposes of this description, the term memory refers to all memory accessible by the processor 351, including internal memory 352 and memory within the processor 351 itself. User data files are typically stored in the memory 352. In many mobile devices, the memory 352 may be a volatile or nonvolatile memory, such as flash memory, or a mixture of both.

The foregoing method descriptions and the process flow diagrams are provided merely as illustrative examples and are not intended to require or imply that the processes, steps or blocks of the various aspects must be performed in the order presented. As will be appreciated by one of skill in the art the order of processes in the foregoing aspects may be performed in any order. Further, words such as "thereafter," "then," "next," etc. are not intended to limit the order of the processes; these words are simply used to guide the reader through the description of the methods.

The various illustrative logical blocks, modules, circuits, and algorithm in blocks described in connection with the aspects disclosed herein may be implemented as electronic hardware, computer software, or combination of both. To clearly illustrate this interchangeability of hardware and software, various illustrative components, blocks, modules, circuits, and step have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some processes or methods may be performed by circuitry that is specific to a given function.

In one or more exemplary aspects, the functions described may be implemented in hardware, software, firmware, or any combination thereof. If implemented in software, the functions may be stored on or transmitted over as one or more instructions or code on a computer-readable medium. The processes of a method or algorithm disclosed herein may be embodied in a processor-executable software module executed which may reside on a computer-readable medium. Computer-readable media includes both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a machine readable medium and/or computer-readable medium, which may be incorporated into a computer program product.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

## Claims

1. A method for sharing files within a social network, comprising:
establishing (151) a close range communication link between a first mobile device (2) and a second mobile device (4);
receiving in the first mobile device (2) social network information from the second mobile device (4) via the close range communication link, wherein the social network information includes a social network identifier included within metadata of a file that is designated for sharing within the social network and stored in the second mobile device;
discovering (111) in the first mobile device (2) whether the first mobile device (2) and the second mobile device (4) are members of a common social network based upon the received social network information;
selecting (154) a further file for transmission to the second mobile device (4) based upon the discovered common social network; and
transmitting (160) the selected file from the first mobile device (2) to the second mobile device (4) via the close range communication link.

2. The method for sharing files within a social network of claim 1, wherein the social network information further includes a social network identifier included within a data file received from the second mobile device (4).

3. The method for sharing files within a social network of claim 1, wherein the social network information includes an identifier of the second mobile device (4), the method further comprising:
comparing the received identifier of the second mobile device (4) to identifiers stored in metadata of a file stored in the first mobile device (2).

4. The method for sharing files within a social network of claim 1, wherein:
the social network information includes an identifier of the second mobile device (4);
and
discovering whether the first mobile device (2) and the second mobile device (4) are members of a common social network comprises:
comparing the received identifier of the second mobile device (4) to an address database stored in the first mobile device (2);
identifying a contact data record matching the received identifier of the second mobile device (4); and
determining a category assigned to the identified contact data record.

5. The method for sharing files within a social network of claim 1, wherein selecting a further file for transmission to the second mobile device (4) based upon the discovered common social network comprises:
selecting a file designated for sharing with the discovered common social network.

6. The method for sharing files within a social network of claim 1, further comprising receiving in the first mobile device (2) via the close range communication link information regarding files designated for sharing with the discovered common social network that arc stored in the second mobile device (4),
wherein selecting a further file for transmission to the second mobile device (4) based upon the discovered common social network comprises:
selecting files designated for sharing with the discovered common social network; and
excluding any selected files identified in the received information regarding files designated for sharing with the discovered common social network that are stored in the second mobile device (4).

7. A mobile device, comprising:
means for establishing a close range communication link between the mobile device (2) and a second mobile device (4);
means for receiving social network information from the second mobile device (4) via the close range communication link, wherein the social network information includes a social network identifier included within metadata of a file that is designated for sharing within the social network and stored in the second mobile device;
means for discovering whether the mobile device (2) and the second mobile device are members of a common social network based upon the received social network information;
means for selecting a further file for transmission to the second mobile device (4) based upon the discovered common social network; and
means for transmitting the selected file from the first mobile device (2) to the second mobile device (4) via the close range communication link.

8. The mobile device of claim 7, further comprising:
means for receiving a data file from the second mobile device (4),
wherein the social network information further includes a social network identifier included within the data file received from the second mobile device (4).

9. The mobile device of claim 7, wherein the social network information includes an identifier of the second mobile device (4), the mobile device (2) further comprising:
means for comparing the received identifier of the second mobile device (4) to identifiers stored in metadata of a file stored in the mobile device (2).

10. The mobile device of claim 7, herein:
the social network information includes an identifier of the second mobile device (4);
and
means for discovering whether the mobile device (2) and the second mobile device (4) are members of a common social network comprises:
means for comparing the received identifier of the second mobile device (4) to an address database stored in the mobile device (2);
means for identifying a contact data record matching the received identifier of the second mobile device (4); and
means for determining a category assigned to the identified contact data record.

11. The mobile device of claim 7, wherein means for selecting a further file for transmission to the second mobile device (4) based upon the discovered common social network comprises:
means for selecting a file designated for sharing with the discovered common social network.

12. The mobile device of claim 7, further comprising:
means for receiving via the close range communication link information regarding files designated for sharing with the discovered common social network that are stored in the second mobile device (4),
wherein means for selecting a further file for transmission to the second mobile device (4) based upon the discovered common social network comprises:
means for selecting files designated for sharing with the discovered common social network; and
means for excluding any selected files identified in the received information regarding files designated for sharing with the discovered common social network that are stored in the second mobile device (4).

13. The mobile device of claim 7, further comprising:
a processor (351);
a memory (352) coupled to the processor (351); and
a wireless close range communication transceiver (378) coupled to the processor (351) and configured to establish close range communication links;
wherein the processor (351) is configured with software executable instructions to perform operations comprising:
establishing (151) the close range communication link between the mobile device (2) and the second mobile device (4) via the wireless close range communication transceiver (378);
receiving the social network information from the second mobile device (4) via the close range communication link;
discovering (111) whether the mobile device (2) and the second mobile device (4) are members of the common social network based upon the received social network information;
selecting (154) the further file stored in the memory for transmission to the second mobile device (4) based upon the discovered common social network; and
transmitting (160) the selected file from the mobile device (2) to the second mobile device (4) via the close range communication link.

14. A computer program product, comprising a computer-readable medium, the computer-readable medium comprising instructions for performing a method in accordance with any of claims 1 to 6.

## Patentansprüche

1. Ein Verfahren zum Teilen von Dateien innerhalb eines sozialen Netzwerks, das Folgendes aufweist:
Einrichten (151) einer Nahbereichskommunikationsverbindung zwischen einer ersten Mobileinrichtung (2) und einer zweiten Mobileinrichtung (4);
Empfangen, in der ersten Mobileinrichtung (2), von Information des sozialen Netzwerks von der zweiten Mobileinrichtung (4) über die Nahbereichskommunikationsverbindung, wobei die Information des sozialen Netzwerkes einen Identifikator des sozialen Netzwerkes beinhaltet, der in Metadaten einer Datei enthalten ist, die zum Teilen innerhalb des sozialen Netzwerks bestimmt ist und die in der zweiten Mobileinrichtung gespeichert ist;
Feststellen (111) in der ersten Mobileinrichtung (2), ob die erste Mobileinrichtung (2) und die zweite Mobileinrichtung (4) Mitglieder eines gemeinsamen sozialen Netzwerks sind basierend auf der empfangenen Information des sozialen Netzwerkes;
Auswählen (154) einer weiteren Datei zur Übertragung an die zweite Mobileinrichtung (4) basierend auf dem festgestellten gemeinsamen sozialen Netzwerk; und
Übertragen (160) der ausgewählten Datei von der ersten Mobileinrichtung (2) an die zweite Mobileinrichtung (4) über die Nahbereichskommunikationsverbindung.

2. Verfahren zum Teilen von Dateien innerhalb eines sozialen Netzwerks nach Anspruch 1, wobei die Information des sozialen Netzwerks einen Identifikator des sozialen Netzwerks beinhaltet, der innerhalb einer Datendatei bzw. Datei enthalten ist, die von der zweiten Mobileinrichtung (4) empfangen wird.

3. Verfahren zum Teilen von Dateien innerhalb eines sozialen Netzwerks nach Anspruch 1, wobei die Information des sozialen Netzwerks einen Identifikator der zweiten Mobileinrichtung (4) enthält, wobei das Verfahren weiter Folgendes aufweist:
Vergleichen des empfangenen Identifikators der zweiten Mobileinrichtung (4) mit Identifikatoren, die in Metadaten einer Datei gespeichert sind, die in der ersten Mobileinrichtung (2) gespeichert ist.

4. Verfahren zum Teilen von Dateien innerhalb eines sozialen Netzwerks nach Anspruch 1, wobei:
die Information des sozialen Netzwerks einen Identifikator der zweiten Mobileinrichtung (4) beinhaltet; und
das Feststellen, ob die erste Mobileinrichtung (2) und die zweite Mobileinrichtung (4) Mitglieder eines gemeinsamen sozialen Netzwerks sind Folgendes aufweist:
Vergleichen des empfangenen Identifikators der zweiten Mobileinrichtung (4) mit einer Adressdatenbank, die in der ersten Mobileinrichtung (2) gespeichert ist;
Identifizieren eines Kontaktdateneintrags, der mit dem empfangenen Identifikator der zweiten Mobileinrichtung (4) zusammenpasst; und
Bestimmen einer Kategorie, die dem identifizierten Kontaktdateneintrag zugewiesen ist.

5. Verfahren zum Teilen von Dateien innerhalb eines sozialen Netzwerks nach Anspruch 1, wobei das Auswählen einer weiteren Datei zur Übertragung an die zweite Mobileinrichtung (4) basierend auf dem festgestellten gemeinsamen sozialen Netzwerk Folgendes aufweist:
Auswählen einer Datei, die zum Teilen mit dem festgestellten gemeinsamen sozialen Netzwerk bestimmt ist.

6. Verfahren zum Teilen von Dateien innerhalb eines sozialen Netzwerks nach Anspruch 1, das weiter Empfangen, in der ersten Mobileinrichtung (2) über die Nahbereichskommunikationsverbindung, von Information aufweist, die sich auf Dateien bezieht, die zum Teilen mit dem festgestellten gemeinsamen sozialen Netzwerk bestimmt sind, die in der zweiten Mobileinrichtung (4) gespeichert sind,
wobei das Auswählen einer weiteren Datei zur Übertragung an die zweite Mobileinrichtung (4) basierend auf dem festgestellten gemeinsamen sozialen Netzwerk Folgendes aufweist:
Auswählen von Dateien, die zum Teilen mit dem festgestellten gemeinsamen sozialen Netzwerk bestimmt sind; und
Ausschließen jeglicher ausgewählter Dateien, die in der empfangenen Information identifiziert sind, die sich auf Dateien bezieht, die für das Teilen mit dem festgestellten gemeinsamen sozialen Netzwerk bestimmt sind,
welche in der zweiten Mobileinrichtung (4) gespeichert sind.

7. Mobileinrichtung, die Folgendes aufweist:
Mittel zum Einrichten einer Nahbereichskommunikationsverbindung zwischen der Mobileinrichtung (2) und einer zweiten Mobileinrichtung (4);
Mittel zum Empfangen von Information des sozialen Netzwerks von der zweiten Mobileinrichtung (4) über die Nahbereichskommunikationsverbindung, wobei die Information des sozialen Netzwerkes einen Identifikator des sozialen Netzwerkes beinhaltet, der in Metadaten einer Datei enthalten ist, die zum Teilen innerhalb des sozialen Netzwerks bestimmt ist und die in der zweiten Mobileinrichtung gespeichert ist;
Mittel zum Feststellen, ob die erste Mobileinrichtung (2) und die zweite Mobileinrichtung Mitglieder eines gemeinsamen sozialen Netzwerks sind basierend auf der empfangenen Information des sozialen Netzwerkes;
Mittel zum Auswählen einer weiteren Datei zur Übertragung an die zweite Mobileinrichtung (4) basierend auf dem festgestellten gemeinsamen sozialen Netzwerk; und
Mittel zum Übertragen der ausgewählten Datei von der ersten Mobileinrichtung (2) an die zweite Mobileinrichtung (4) über die Nahbereichskommunikationsverbindung.

8. Mobileinrichtung nach Anspruch 7, die weiter Folgendes aufweist:
Mittel zum Empfangen einer Datendatei bzw. Datei von der zweiten Mobileinrichtung (4),
wobei die Information des sozialen Netzwerks weiter einen Identifikator des sozialen Netzwerks beinhaltet, der innerhalb einer Datei enthalten ist, die von der zweiten Mobileinrichtung (4) empfangen wird.

9. Mobileinrichtung nach Anspruch 7, wobei die Information des sozialen Netzwerks einen Identifikator der zweiten Mobileinrichtung (4) enthält, wobei die Mobileinrichtung (2) weiter Folgendes aufweist:
Mittel zum Vergleichen des empfangenen Identifikators der zweiten Mobileinrichtung (4) mit Identifikatoren, die in Metadaten einer Datei gespeichert sind, die in der ersten Mobileinrichtung (2) gespeichert ist.

10. Mobileinrichtung nach Anspruch 7, wobei:
die Information des sozialen Netzwerks einen Identifikator der zweiten Mobileinrichtung (4) beinhaltet; und
Mittel zum Feststellen, ob die erste Mobileinrichtung (2) und die zweite Mobileinrichtung (4) Mitglieder eines gemeinsamen sozialen Netzwerks sind,
Folgendes aufweisen:
Mittel zum Vergleichen des empfangenen Identifikators der zweiten Mobileinrichtung (4) mit einer Adressdatenbank, die in der ersten Mobileinrichtung (2) gespeichert ist;
Mittel zum Identifizieren eines Kontaktdateneintrags, der mit dem empfangenen Identifikator der zweiten Mobileinrichtung (4) zusammenpasst;
und
Mittel zum Bestimmen einer Kategorie, die dem identifizierten Kontaktdateneintrag zugewiesen ist.

11. Mobileinrichtung nach Anspruch 7, wobei die Mittel zum Auswählen einer weiteren Datei zur Übertragung an die zweite Mobileinrichtung (4) basierend auf dem festgestellten gemeinsamen sozialen Netzwerk Folgendes aufweisen:
Mittel zum Auswählen einer Datei, die zum Teilen mit dem festgestellten gemeinsamen sozialen Netzwerk bestimmt ist.

12. Mobileinrichtung nach Anspruch 7, die weiter Folgendes aufweist:
Mittel zum Empfangen, über die Nahbereichskommunikationsverbindung,
von Information, die sich auf Dateien bezieht, die zum Teilen mit dem festgestellten gemeinsamen sozialen Netzwerk bestimmt sind, die in der zweiten Mobileinrichtung (4) gespeichert sind,
wobei die Mittel zum Auswählen einer weiteren Datei zur Übertragung an die zweite Mobileinrichtung (4) basierend auf dem festgestellten gemeinsamen sozialen Netzwerk Folgendes aufweisen:
Mittel zum Auswählen von Dateien, die zum Teilen mit dem festgestellten gemeinsamen sozialen Netzwerk bestimmt sind; und
Mittel zum Ausschließen jeglicher ausgewählter Dateien, die in der empfangenen Information identifiziert sind, die sich auf Dateien bezieht, die für das Teilen mit dem festgestellten gemeinsamen sozialen Netzwerk bestimmt sind, welche in der zweiten Mobileinrichtung (4) gespeichert sind.

13. Mobileinrichtung nach Anspruch 7, die weiter Folgendes aufweist:
einen Prozessor (351);
einen Speicher (352), der an den Prozessor (351) gekoppelt ist; und
einen drahtlosen Nahbereichskommunikationstransceiver (378), der an den Prozessor (351) gekoppelt ist und konfiguriert ist, um Nahbereichskommunikationsverbindungen einzurichten;
wobei der Prozessor (351) mit durch Software ausführbaren Instruktionen konfiguriert ist, um Vorgänge auszuführen, die Folgendes aufweisen:
Einrichten (151) der Nahbereichskommunikationsverbindung zwischen der Mobileinrichtung (2) und der zweiten Mobileinrichtung (4) über den drahtlosen Nahbereichskommunikationstransceiver (378);
Empfangen der Information des sozialen Netzwerks von der zweiten Mobileinrichtung (4) über die Nahbereichskommunikationsverbindung;
Feststellen (111), ob die Mobileinrichtung (2) und die zweite Mobileinrichtung (4) Mitglieder des gemeinsamen sozialen Netzwerks sind basierend auf der empfangenen Information des sozialen Netzwerks;
Auswählen (154) der weiteren Datei, die in dem Speicher gespeichert ist, zur Übertragung an die zweite Mobileinrichtung (4) basierend auf dem festgestellten gemeinsamen sozialen Netzwerk; und
Übertragen (160) der ausgewählten Datei von der Mobileinrichtung (2) an die zweite Mobileinrichtung (4) über die Nahbereichskommunikationsverbindung.

14. Ein Computerprogrammprodukt, das ein computerlesbares Medium aufweist, wobei das computerlesbare Medium Instruktionen aufweist zum Durchführen eines Verfahrens gemäß einem der Ansprüche 1 bis 6.

## Revendications

1. Procédé de partage de fichiers dans un réseau social, comprenant :
l'établissement (151) d'une liaison de communication à courte portée entre un premier dispositif mobile (2) et un second dispositif mobile (4) ;
la réception, dans le premier dispositif mobile (2), d'informations de réseau social en provenance du second dispositif mobile (4) par l'intermédiaire de la liaison de communication à courte portée, les informations de réseau social comprenant un identificateur de réseau social inclus dans des métadonnées d'un fichier qui est désigné pour être partagé dans le réseau social et stocké dans le second dispositif mobile ;
la découverte (111), dans le premier dispositif mobile (2), du fait que le premier dispositif mobile (2) et le second dispositif mobile (4) sont ou ne sont pas membres d'un réseau social commun sur la base des informations de réseau social reçues ;
la sélection (154) d'un fichier supplémentaire à envoyer au second dispositif mobile (4) sur la base du réseau social commun découvert ; et
l'envoi (160) du fichier sélectionné du premier dispositif mobile (2) au second dispositif mobile (4) par l'intermédiaire de la liaison de communication à courte portée.

2. Procédé de partage de fichiers dans un réseau social selon la revendication 1, dans lequel les informations de réseau social comprennent en outre un identificateur de réseau social inclus dans un fichier de données reçu en provenance du second dispositif mobile (4).

3. Procédé de partage de fichiers dans un réseau social selon la revendication 1, dans lequel les informations de réseau social comprennent un identificateur du second dispositif mobile (4), le procédé comprenant en outre :
la comparaison de l'identificateur reçu du second dispositif mobile (4) à des identificateurs stockés dans des métadonnées d'un fichier stocké dans le premier dispositif mobile (2).

4. Procédé de partage de fichiers dans un réseau social selon la revendication 1, dans lequel :
les informations de réseau social comprennent un identificateur du second dispositif mobile (4) ; et
la découverte du fait que le premier dispositif mobile (2) et le second dispositif mobile (4) sont ou ne sont pas membres d'un réseau social commun comprend :
la comparaison de l'identificateur reçu du second dispositif mobile (4) à une base de données d'adresses stockée dans le premier dispositif mobile (2) ;
l'identification d'un enregistrement de données de contact correspondant à l'identificateur reçu du second dispositif mobile (4) ; et
la détermination d'une catégorie attribuée à l'enregistrement de données de contact identifié.

5. Procédé de partage de fichiers dans un réseau social selon la revendication 1, dans lequel la sélection d'un fichier supplémentaire à envoyer au second dispositif mobile (4) sur la base du réseau social commun découvert comprend :
la sélection d'un fichier désigné pour être partagé avec le réseau social commun découvert.

6. Procédé de partage de fichiers dans un réseau social selon la revendication 1, comprenant en outre la réception, dans le premier dispositif mobile (2), par l'intermédiaire de la liaison de communication à courte portée, d'informations concernant des fichiers désignés pour être partagés avec le réseau social commun découvert qui sont stockés dans le second dispositif mobile (4),
dans lequel la sélection d'un fichier supplémentaire à envoyer au second dispositif mobile (4) sur la base du réseau social commun découvert comprend :
la sélection de fichiers désignés pour être partagés avec le réseau social commun découvert ; et
l'exclusion de tout fichier sélectionné identifié dans les informations reçues concernant des fichiers désignés pour être partagés avec le réseau social commun découvert qui sont stockés dans le second dispositif mobile (4).

7. Dispositif mobile, comprenant :
un moyen pour établir une liaison de communication à courte portée entre le dispositif mobile (2) et un second dispositif mobile (4) ;
un moyen pour recevoir des informations de réseau social en provenance du second dispositif mobile (4) par l'intermédiaire de la liaison de communication à courte portée, les informations de réseau social comprenant un identificateur de réseau social inclus dans des métadonnées d'un fichier qui est désigné pour être partagé dans le réseau social et stocké dans le second dispositif mobile ;
un moyen pour découvrir si le dispositif mobile (2) et le second dispositif mobile (4) sont membres d'un réseau social commun sur la base des informations de réseau social reçues ;
un moyen pour sélectionner un fichier supplémentaire à envoyer au second dispositif mobile (4) sur la base du réseau social commun découvert ; et
un moyen pour envoyer le fichier sélectionné du dispositif mobile (2) au second dispositif mobile (4) par l'intermédiaire de la liaison de communication à courte portée.

8. Dispositif mobile selon la revendication 7, comprenant en outre :
un moyen pour recevoir un fichier de données en provenance du second dispositif mobile (4),
dans lequel les informations de réseau social comprennent en outre un identificateur de réseau social inclus dans le fichier de données reçu en provenance du second dispositif mobile (4).

9. Dispositif mobile selon la revendication 7, dans lequel les informations de réseau social comprennent un identificateur du second dispositif mobile (4), le dispositif mobile (2) comprenant en outre :
un moyen pour comparer l'identificateur reçu du second dispositif mobile (4) à des identificateurs stockés dans des métadonnées d'un fichier stocké dans le dispositif mobile (2).

10. Dispositif mobile selon la revendication 7, dans lequel :
les informations de réseau social comprennent un identificateur du second dispositif mobile (4) ; et
le moyen pour découvrir si le dispositif mobile (2) et le second dispositif mobile (4) sont membres d'un réseau social commun comprend :
un moyen pour comparer l'identificateur reçu du second dispositif mobile (4) à une base de données d'adresses stockée dans le dispositif mobile (2) ;
un moyen pour identifier un enregistrement de données de contact correspondant à l'identificateur reçu du second dispositif mobile (4) ; et
un moyen pour déterminer une catégorie attribuée à l'enregistrement de données de contact identifié.

11. Dispositif mobile selon la revendication 7, dans lequel le moyen pour sélectionner un fichier supplémentaire à envoyer au second dispositif mobile (4) sur la base du réseau social commun découvert comprend :
un moyen pour sélectionner un fichier désigné pour être partagé avec le réseau social commun découvert.

12. Dispositif mobile selon la revendication 7, comprenant en outre :
un moyen pour recevoir, par l'intermédiaire de la liaison de communication à courte portée, des informations concernant des fichiers désignés pour être partagés avec le réseau social commun découvert qui sont stockés dans le second dispositif mobile (4),
dans lequel le moyen pour sélectionner un fichier supplémentaire à envoyer au second dispositif mobile (4) sur la base du réseau social commun découvert comprend :
un moyen pour sélectionner des fichiers désignés pour être partagés avec le réseau social commun découvert ; et
un moyen pour exclure tout fichier sélectionné identifié dans les informations reçues concernant des fichiers désignés pour être partagés avec le réseau social commun découvert qui sont stockés dans le second dispositif mobile (4).

13. Dispositif mobile selon la revendication 7, comprenant en outre :
un processeur (351) ;
une mémoire (352) couplée au processeur (351) ; et
un émetteur-récepteur de communication à courte portée sans fil (378) couplé au processeur (351) et configuré pour établir des liaisons de communication à courte portée ;
dans lequel le processeur (351) est configuré avec des instructions logicielles exécutables pour effectuer des opérations comprenant :
l'établissement (151) de la liaison de communication à courte portée entre le dispositif mobile (2) et le second dispositif mobile (4) par l'intermédiaire de l'émetteur-récepteur de communication à courte portée sans fil (378) ;
la réception des informations de réseau social en provenance du second dispositif mobile (4) par l'intermédiaire de la liaison de communication à courte portée ;
la découverte (111) du fait que le dispositif mobile (2) et le second dispositif mobile (4) sont ou ne sont pas membres du réseau social commun sur la base des informations de réseau social reçues ;
la sélection (154) du fichier supplémentaire stocké dans la mémoire à envoyer au second dispositif mobile (4) sur la base du réseau social commun découvert ; et
l'envoi (160) du fichier sélectionné du dispositif mobile (2) au second dispositif mobile (4) par l'intermédiaire de la liaison de communication à courte portée.

14. Produit programme d'ordinateur, comprenant un support lisible par ordinateur, le support lisible par ordinateur comprenant des instructions servant à mettre en oeuvre un procédé selon l'une quelconque des revendications 1 à 6.
